# EUROPÄISCHE PATENTANMELDUNG

(11) **EP 3 540 302 A1**
(43) Veröffentlichungstag der Anmeldung: **18.09.2019**
(21) Anmeldenummer: 18162094.9
(22) Anmeldetag: 15.03.2018
(51) Int. Cl.: F21V 19/00

(54) **HALTEVORRICHTUNG FÜR EINEN ELEKTROMAGNETISCHEN STRAHLER**

(71) Anmelder: Heraeus Noblelight GmbH, 63450 Hanau (DE)
(72) Erfinder: Graziel, Bernhard, 63110 Rodgau (DE); Tittmann, Michael, 63454 Hanau (DE); Büngener, Jens, 63517 Rodenbach (DE); von Riewel, Larisa, 51465 Bergisch Gladbach (DE)
(74) Vertreter: Herzog IP Patentanwalts GmbH

(57) **Zusammenfassung**

Die Erfindung betrifft eine Haltevorrichtung (101), beinhaltend
a) ein erstes Halteelement (102), und
b) ein weiteres Halteelement (103);
wobei die Haltevorrichtung (101) dazu ausgebildet ist,
a. reversibel aus einem Haltezustand (202) in einen Entnahmezustand (201) überführt zu werden, und
b. in dem Haltezustand (202) einen elektromagnetischen Strahler (104) mittels eines Formschlusses des elektromagnetischen Strahlers (104) mit dem ersten Halteelement (102) und dem weiteren Halteelement (103) so zu halten, dass der elektromagnetische Strahler (104) dazu angeordnet ist, elektromagnetische Strahlung in eine erste Richtung (105) abzustrahlen,
wobei die Haltevorrichtung (101) ferner so ausgebildet ist, dass
A) der Formschluss in dem Entnahmezustand (201) gelöst ist, und
B) ein Überführen der Haltevorrichtung (101) aus dem Haltezustand (202) in den Entnahmezustand (201) ein Bewegen des weiteren Halteelements (103) relativ zu dem ersten Halteelement (102) in der ersten Richtung (105) beinhaltet.
Ferner bezieht sich die Erfindung auf eine Anordnung (100), beinhaltend die Haltevorrichtung (101) und den elektromagnetischen Strahler (104); ein Verfahren (700) zum Bestrahlen mittels des elektromagnetischen Strahlers (104); ein Druckerzeugnis (800); sowie Verwendungen der Haltevorrichtung (101) und der Anordnung (100).

## Beschreibung

Die Erfindung betrifft eine Haltevorrichtung, beinhaltend
a) ein erstes Halteelement, und
b) ein weiteres Halteelement;
wobei die Haltevorrichtung dazu ausgebildet ist,
a. reversibel aus einem Haltezustand in einen Entnahmezustand überführt zu werden, und
b. in dem Haltezustand einen elektromagnetischen Strahler mittels eines Formschlusses des elektromagnetischen Strahlers mit dem ersten Halteelement und dem weiteren Halteelement so zu halten, dass der elektromagnetische Strahler dazu angeordnet ist, elektromagnetische Strahlung in eine erste Richtung abzustrahlen,
wobei die Haltevorrichtung ferner so ausgebildet ist, dass
A) der Formschluss in dem Entnahmezustand gelöst ist, und
B) ein Überführen der Haltevorrichtung aus dem Haltezustand in den Entnahmezustand ein Bewegen des weiteren Halteelements relativ zu dem ersten Halteelement in der ersten Richtung beinhaltet.
Ferner bezieht sich die Erfindung auf eine Anordnung, beinhaltend die Haltevorrichtung und den elektromagnetischen Strahler; ein Verfahren zum Bestrahlen mittels des elektromagnetischen Strahlers; ein Druckerzeugnis; sowie Verwendungen der Haltevorrichtung und der Anordnung.

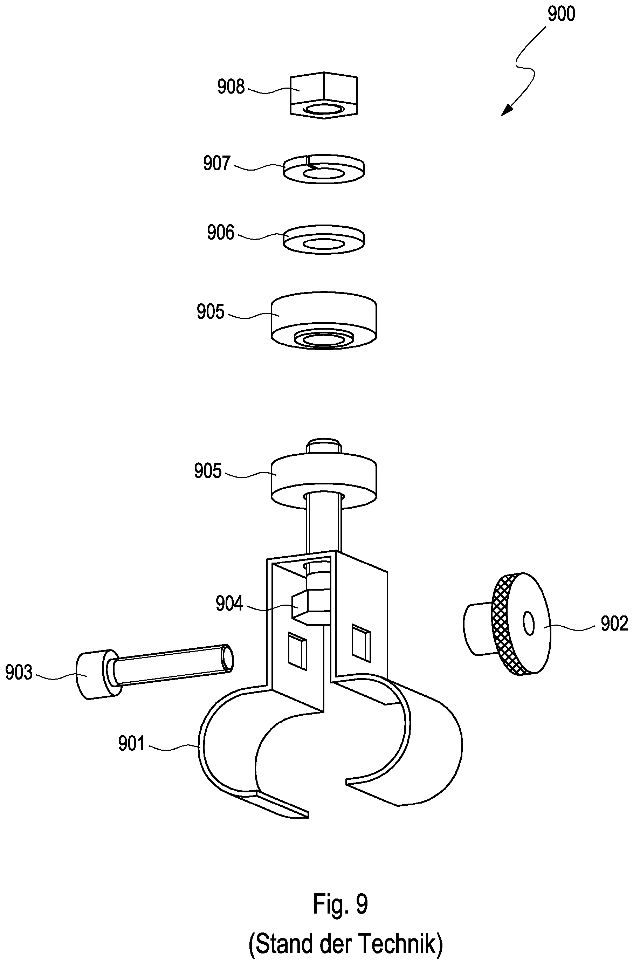

In zahlreichen industriellen Prozessen werden Strahler, wie beispielsweise IR-Strahler und UV-Strahler, verwendet. IR-Strahler kommen oftmals in Wärmeprozessen wie beispielsweise dem Trocknen von Drucktinten oder Lacken, dem Härten von Beschichtungen, Formen, Prägen, Laminieren, Fügen, Schweißen, Anbräunen, Erwärmen, Aufheizen, Vorwärmen und der Keimreduzierung zum Einsatz. UV-Strahler werden beispielsweise zum Entkeimen von Oberflächen, zur Ballastwasserbehandlung, zur UV-Härtung, Oberflächenaktivierung, Oberflächenreinigung, zum Abbau von Gerüchen und Fetten in der Küchenabluft, zum Abbau von Schadstoffen sowie in der Photochemie eingesetzt. Die vorgenannten Strahler sind üblicherweise als Einzelstrahler oder als Module, beispielsweise von Heraeus Noblelight GmbH, erhältlich. Solche Strahler müssen in den vorgenannten Anwendungen positioniert und raumfest gehalten werden. Hierfür werden im Stand der Technik Haltevorrichtungen wie beispielsweise die in Figur 9 gezeigte Klemmfeder verwendet. Diese Haltevorrichtung des Stands der Technik wird seit langer Zeit verwendet, obwohl sie einige gravierende technische Nachteile aufweist. So erfordert das Montieren oder Demontieren eines Strahlers ein Betätigen der seitlich an der Klemmfeder angebrachten Rändelmutter. Sind hier mehrere Strahler auf engem Bauraum zu montieren bzw. montiert, so kann die seitliche Position der Rändelmutter umständlich zu erreichen sein. Insbesondere besteht die Gefahr, mit benachbarten Strahlern, die nach Gebrauch noch gefährlich heiß sein können, in Berührung zu kommen. Ist der Strahler mit der genannten Klemmfeder nach unten weisend angebracht wie dies bei vielen industriellen Prozessen üblich ist, besteht zudem die Gefahr, dass der Strahler nach dem Öffnen der Klemmfeder aus dieser herausfällt und somit beschädigt wird. Ferner besteht die Klemmfeder neben dem Federbauteil aus zahlreichen weiteren Bauteilen. Dies erhöht die Fehleranfälligkeit der Montage sowie die dafür benötigte Arbeitszeit. Insbesondere wenn die Montage über Kopf erfolgen muss, können Bauteile herunterfallen und verloren gehen.

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, eine Haltevorrichtung für einen Strahler bereitzustellen, die eine möglichst effektive Strömungsführung und gleichzeitig eine möglichst leicht zugängliche Befestigung des Strahlers, auch auf engem Bauraum, erlaubt. Hierbei kann die Strömungsführung insbesondere eine Luftkühlung des Strahlers und auch ein Abführen von bei einem Bestrahlen entstehenden Gasen wie beispielsweise Lösemitteldämpfen betreffen. Demnach erlaubt die erfindungsgemäße Haltevorrichtung vorzugsweise eine möglichst effektive Luftkühlung eines gehaltenen Strahlers oder ein möglichst effektives Absaugen von beim Bestrahlen entstehenden Gasen oder beides. Eine weitere Aufgabe der Erfindung ist es, eine Haltevorrichtung für einen Strahler bereitzustellen, deren Handhabung, beispielsweise zum Zweck der Montage oder der Wartung, möglichst einfach, schnell und wenig fehleranfällig möglich ist. Ferner ist es eine Aufgabe der Erfindung, eine Haltevorrichtung für einen Strahler bereitzustellen, die den gehaltenen Strahler inhärent, also möglichst ohne zusätzliches isolierendes Bauteil, möglichst zuverlässig elektrisch isoliert. Eine weitere Aufgabe der Erfindung ist es, eine Haltevorrichtung für einen Strahler bereitzustellen, die möglichst einfach und komfortabel an einem Tragelement, insbesondere über Kopf, montiert werden kann. Hierzu ist ein dafür vorgesehenes Befestigungsmittel möglichst leicht zugänglich. Eine weitere Aufgabe der Erfindung ist es, eine Haltevorrichtung für einen Strahler bereitzustellen, die möglichst einfach aufgebaut ist, insbesondere aus möglichst wenigen Einzelteilen besteht. Eine weitere Aufgabe der Erfindung ist es, eine Haltevorrichtung für einen Strahler bereitzustellen, die eine für den Strahler möglichst schonende Montage und Demontage dessen erlaubt. Eine weitere Aufgabe der Erfindung ist es, eine Haltevorrichtung für einen Strahler bereitzustellen, die ein Montieren und Demontieren der Haltevorrichtung an einem Tragelement und auch ein Einbringen und Entnehmen des Strahlers in die und aus der Haltevorrichtung auf einer einzigen Seite der Haltevorrichtung, vorzugsweise anwendungsseitig, ermöglicht. Ferner ist es eine Aufgabe der Erfindung, eine Bestrahlungsanordnung und ein Bestrahlungsverfahren bereitzustellen, die/das sich mindestens einen der Vorteile der erfindungsgemäßen Haltevorrichtung zu Nutze macht.

Ein Beitrag zur mindestens teilweisen Erfüllung mindestens einer dieser Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Ausführungsform 1 einer Haltevorrichtung, beinhaltend
a) ein erstes Halteelement, und
b) ein weiteres Halteelement;
wobei die Haltevorrichtung dazu ausgebildet ist,
a. reversibel aus einem Haltezustand in einen Entnahmezustand überführt zu werden, und
b. in dem Haltezustand einen elektromagnetischen Strahler mittels einer Formschlusses des elektromagnetischen Strahlers mit dem ersten Halteelement und dem weiteren Halteelement so zu halten, dass der elektromagnetische Strahler dazu angeordnet ist, elektromagnetische Strahlung in eine erste Richtung abzustrahlen,
wobei die Haltevorrichtung ferner so ausgebildet ist, dass
A) der Formschluss in dem Entnahmezustand gelöst ist, und
B) ein Überführen der Haltevorrichtung aus dem Haltezustand in den Entnahmezustand ein Bewegen des weiteren Halteelements relativ zu dem ersten Halteelement in der ersten Richtung beinhaltet.
Durch diese Bewegung wird vorzugsweise der Formschluss gelöst. Die vorgenannte Bewegung ist vorzugsweise eine Translationsbewegung. Hierbei ist der elektromagnetische Strahler nicht notwendigerweise dazu ausgebildet und angeordnet ausschließlich in die erste Richtung die elektromagnetische Strahlung abzustrahlen. Die erste Richtung ist bevorzugt von der Haltevorrichtung weggerichtet. Bevorzugt ist die Haltevorrichtung ferner dazu ausgebildet, den elektromagnetischen Strahler in dem Haltezustand mittels des Formschlusses des elektromagnetischen Strahlers mit dem ersten Halteelement und dem weiteren Halteelementgegen gegen die Erdanziehungskraft zu halten. Die erste Richtung ist vorzugsweise nach unten, also in Richtung der Erdanziehungskraft, gerichtet. Ferner ist die Haltevorrichtung bevorzugt so ausgebildet, dass in dem Entnahmezustand der elektromagnetische Strahler aus der Haltevorrichtung entnommen werden kann, vorzugsweise in der ersten Richtung oder nach unten, bevorzugter vertikal nach unten, also in Richtung der Erdanziehungskraft, oder beides. Der Begriff Formschluss bedeutet hierin nicht zwingend, dass in dem Haltezustand eine in jeder Raumrichtung fixe Verbindung zwischen dem elektromagnetischen Strahler und dem ersten und weiteren Halteelement besteht. Vielmehr bilden das erste und das weitere Halteelement in dem Haltezustand eine Halteform, welche dazu ausgebildet ist, den elektromagnetischen Strahler, so zu halten, dass der elektromagnetische Strahler dazu angeordnet ist, die elektromagnetische Strahlung in die erste Richtung abzustrahlen. Bevorzugt ist die Haltevorrichtung so ausgebildet, das der elektromagnetische Strahler in dem Haltzustand mittels des Formschlusses mit dem ersten Halteelement und dem weiteren Halteelement so gehalten ist, dass eine Bewegung des elektromagnetischen Strahlers mindestens in der ersten Richtung eingeschränkt ist, wobei der elektromagnetische Strahler bevorzugter in der ersten Richtung fixiert ist. In diesem Zusammenhang ist es ferner bevorzugt, dass eine Bewegung des elektromagnetischen Strahlers mindestens in der ersten Richtung und einer dazu senkrechten Richtung eingeschränkt ist, wobei der elektromagnetische Strahler bevorzugter in diesen Richtungen fixiert ist. Weiter in diesem Zusammenhang ist es noch bevorzugter, dass eine Bewegung des elektromagnetischen Strahlers mindestens in einer durch die erste Richtung und eine dazu senkrechte Richtung aufgespannten Ebene eingeschränkt ist, bevorzugter ist der elektromagnetische Strahler in der genannten Ebene fixiert. In den vorgenannten Fällen kann eine Bewegung des elektromagnetischen Strahlers, bevorzugt eine Translationsbewegung, in mindestens einer Richtung, vorzugsweise in genau einer Richtung, in dem Haltezustand durch den Formschluss nicht eingeschränkt sein. Hierbei ist die die Richtung bevorzugt eine Längsrichtung des elektromagnetischen Strahlers, also eine Richtung der Länge des elektromagnetischen Strahlers. Besonders bevorzugt ist die Haltevorrichtung so ausgebildet, das der elektromagnetische Strahler in dem Haltzustand mittels des Formschlusses mit dem ersten Halteelement und dem weiteren Halteelement so gehalten ist, dass jede Translationsbewegung, bevorzugter jede Bewegung, des elektromagnetischen Strahlers, mit Ausnahme einer Translationsrichtung, bevorzugt in einer Richtung der Länge des elektromagnetischen Strahlers, eingeschränkt ist, wobei der elektromagnetische Strahler bevorzugt in jeder Richtung mit Ausnahme der Richtung seiner Länge fixiert ist. Das erste Halteelement und das weitere Halteelement sind vorzugsweis nicht einstückig miteinander ausgebildet.

In einer erfindungsgemäßen Ausführungsform 2 ist die Haltevorrichtung nach ihrer Ausführungsform 1 ausgestaltet, wobei das erste Halteelement oder das weitere Halteelement oder jeweils beide einstückig ausgebildet sind. Das weitere Halteelement besteht bevorzugt aus einem Metall. Besonders bevorzugt ist das erste Halteelement einstückig ausgebildet.

In einer erfindungsgemäßen Ausführungsform 3 ist die Haltevorrichtung nach ihrer Ausführungsform 1 oder 2 ausgestaltet, wobei der elektromagnetische Strahler eine erste Seite und eine der ersten Seite gegenüberliegende weitere Seite hat, wobei das erste Halteelement eine erste Oberflächenform beinhaltet, die dazu ausgebildet ist, in dem Haltezustand den elektromagnetischen Strahler auf seiner ersten Seite aufzunehmen, wobei das weitere Halteelement eine weitere Oberflächenform beinhaltet, die dazu ausgebildet ist, in dem Haltezustand den elektromagnetischen Strahler auf seiner weiteren Seite aufzunehmen, wobei die erste Oberflächenform und die weitere Oberflächenform zusammen den Formschluss mit dem elektromagnetischen Strahler bilden. Bevorzugt ist die erste Oberflächenform dazu ausgebildet, in dem Haltezustand den elektromagnetischen Strahler durch teilweises Umschließen des elektromagnetischen Strahlers auf der ersten Seite aufzunehmen. Vorzugsweise ist die erste Oberflächenform so ausgebildet, dass der in dem Haltezustand auf der ersten Seite in der ersten Oberflächenform aufgenommene elektromagnetische Strahler das erste Halteelement über die erste Oberflächenform zumindest teilweise, vorzugsweise über deren gesamte Oberfläche, kontaktiert. Alternativ oder zusätzlich bevorzugt ist die weitere Oberflächenform dazu ausgebildet, in dem Haltezustand den elektromagnetischen Strahler durch teilweises Umschließen des elektromagnetischen Strahlers auf der weiteren Seite aufzunehmen. Vorzugsweise ist die weitere Oberflächenform so ausgebildet, dass der in dem Haltezustand auf der weiteren Seite in der weiteren Oberflächenform aufgenommene elektromagnetische Strahler das weitere Halteelement die weitere Oberflächenform zumindest teilweise, vorzugsweise über deren gesamte Oberfläche, kontaktiert.

In einer erfindungsgemäßen Ausführungsform 4 ist die Haltevorrichtung nach einer ihrer vorhergehenden Ausführungsformen ausgestaltet, wobei das erste Halteelement als flache Platte ausgebildet ist. Die flache Platte erstreckt sich vorzugsweise in einer Plattenebene und einer dazu senkrechten Dicke. Die Plattenebene wird durch eine Länge der Platte und eine dazu senkrechte Breite aufgespannt, wobei die Dicke der Platte um mindestens einen Faktor 2, bevorzugt 3, bevorzugter 5, am bevorzugtesten 10, weniger ist als jeweils eine Länge und eine Breite der Platte. Eine flache Platte muss nicht notwendigerweise eben ausgebildet sein, was jedoch bevorzugt ist. Die erste Richtung liegt vorzugsweise in der Plattenebene. Ist der elektromagnetische Strahler in dem Haltestand gehalten, erstreckt sich seine Länge vorzugsweise in einer Richtung der Dicke der Platte.

In einer erfindungsgemäßen Ausführungsform 5 ist die Haltevorrichtung nach einer ihrer vorhergehenden Ausführungsformen ausgestaltet, wobei das weitere Halteelement bandförmig ausgebildet ist. Bevorzugt beinhaltet das bandförmig ausgebildete weitere Halteelement ein flaches Band, welches mindestens eine Krümmung beinhaltet. Die mindestens eine Krümmung bildet vorzugsweise mindestens teilweise, bevorzugt vollständig, die weitere Oberflächenform. Bevorzugt ist das weitere Halteelement durch Biegen eines Flachstahls erhältlich.

In einer erfindungsgemäßen Ausführungsform 6 ist die Haltevorrichtung nach einer ihrer vorhergehenden Ausführungsformen ausgestaltet, wobei ein Überführen der Haltevorrichtung aus dem Entnahmezustand in den Haltezustand ein Bewegen des weiteren Halteelements relativ zu dem ersten Halteelement entgegengesetzt zu der ersten Richtung beinhaltet. Durch diese Bewegung wird vorzugsweise der Formschluss hergestellt. Die vorgenannte Bewegung ist vorzugsweise eine Translationsbewegung.

In einer erfindungsgemäßen Ausführungsform 7 ist die Haltevorrichtung nach einer ihrer vorhergehenden Ausführungsformen ausgestaltet, wobei die Haltevorrichtung zusätzlich ein erstes Befestigungsmittel beinhaltet, wobei das erste Halteelement und das weitere Halteelement zumindest in dem Haltezustand mittels des ersten Befestigungsmittels miteinander verbunden sind. Bevorzugt sind das erste Halteelement und das weitere Halteelement auch in dem Entnahmezustand mittels des ersten Befestigungsmittels miteinander verbunden. Hierbei können das erste Halteelement und das weitere Halteelement fest miteinander verbunden sein oder lediglich so miteinander verbunden sein, dass eine Relativbewegung des ersten Halteelements und des weiteren Halteelements zueinander mittels des ersten Befestigungsmittels eingeschränkt ist. Vorzugsweise ist diese Relativbewegung auf lineare Bewegungen entlang der ersten Richtung oder einer zu der ersten Richtung entgegengesetzten Richtung oder beides eingeschränkt. Bevorzugt sind das erste Haltemittel und das weitere Haltemittel formschlüssig oder kraftschlüssig oder beides miteinander verbunden, wobei formschlüssig darüber hinaus bevorzugt ist. In dem Haltezustand sind das erste Halteelement und das weitere Halteelement bevorzugt fest miteinander verbunden. In dem Entnahmezustand sind das erste Halteelement und das weitere Halteelement bevorzugt nicht fest miteinander verbunden, also lediglich so miteinander verbunden, dass eine Relativbewegung des ersten Halteelements und des weiteren Halteelements zueinander mittels des ersten Befestigungsmittels eingeschränkt ist. Weiter bevorzugt sind das erste Halteelement und das weitere Halteelement mittels des ersten Befestigungsmittels lösbar miteinander verbunden.

In einer erfindungsgemäßen Ausführungsform 8 ist die Haltevorrichtung nach ihrer Ausführungsform 7 ausgestaltet, wobei das erste Befestigungsmittel ein Gewinde beinhaltet. Ein bevorzugtes ein Gewinde beinhaltendes erstes Befestigungsmittel ist eine Schraube.

In einer erfindungsgemäßen Ausführungsform 9 ist die Haltevorrichtung nach ihrer Ausführungsform 7 oder 8 ausgestaltet, wobei die Haltevorrichtung so ausgebildet ist, dass das Überführen der Haltevorrichtung aus dem Haltezustand in den Entnahmezustand ein Bewegen des ersten Befestigungsmittels relativ zu dem ersten Halteelement in der ersten Richtung beinhaltet. Im Fall eines ein Gewinde beinhaltenden ersten Befestigungsmittels erfolgt das vorgenannte Bewegen des ersten Befestigungsmittels vorzugsweise durch eine Drehung des ersten Befestigungsmittels, die mittels des Gewindes in eine Translationsbewegung in die erste Richtung umgesetzt wird.

In einer erfindungsgemäßen Ausführungsform 10 ist die Haltevorrichtung nach einer ihrer Ausführungsformen 7 bis 9 ausgestaltet, wobei die Haltevorrichtung so ausgebildet ist, dass das Überführen der Haltevorrichtung aus dem Entnahmezustand in den Haltezustand ein Bewegen des Befestigungsmittels relativ zu dem ersten Halteelement entgegengesetzt zu der ersten Richtung beinhaltet. Im Fall eines ein Gewinde beinhaltenden ersten Befestigungsmittels erfolgt das vorgenannte Bewegen des ersten Befestigungsmittels vorzugsweise durch eine Drehung des ersten Befestigungsmittels, die mittels des Gewindes in eine Translationsbewegung in die der ersten Richtung entgegensetzte Richtung umgesetzt wird.

In einer erfindungsgemäßen Ausführungsform 11 ist die Haltevorrichtung nach einer ihrer Ausführungsformen 7 bis 10 ausgestaltet, wobei das erste Befestigungsmittel mindestens teilweise zwischen Bereichen des weiteren Halteelements angeordnet ist, so dass das erste Befestigungsmittel bei einem Translatieren des ersten Befestigungsmittels in die erste Richtung um eine minimale Wegstrecke das erste Befestigungsmittel das weitere Halteelement mitnimmt und so in die erste Richtung bewegt. Hierdurch kann das Überführen der Haltevorrichtung aus dem Haltezustand in den Entnahmezustand besonders komfortabel und in besonders wenigen Arbeitsschritten erfolgen. Alternativ oder zusätzlich bevorzugt ist das erste Befestigungsmittel derart zwischen den Bereichen des weiteren Halteelements angeordnet, dass bei einem Translatieren des ersten Befestigungsmittels entgegengesetzt zu der ersten Richtung um eine minimale Wegstrecke das erste Befestigungsmittel das weitere Halteelement mitnimmt und so entgegengesetzt zu der ersten Richtung bewegt. Bevorzugt beinhaltet das erste Befestigungsmittel eine Schraube, bevorzugter ist das erste Befestigungsmittel eine Schraube, jeweils mit einem Schraubenkopf, wobei der Schraubenkopf zwischen den Bereichen des weiteren Halteelements angeordnet ist. Das erste Befestigungsmittel kann weitere Elemente beinhalten, wie beispielsweise eine Gewindesicherungsscheibe, die sich vorzugsweise auf einem Gewindeschaft der Schraube befindet; ein Gewinde in dem ersten Halteelement; und eine Federscheibe, die vorzugsweise zwischen einem Schraubenkopf der Schaube und dem weiteren Halteelement angeordnet ist. Eine geeignete Gewindesicherungsscheibe ist beispielsweise unter der Bezeichnung STARLOCK® von Gebr. TITGEMEYER GmbH & Co. KG erhältlich.

In einer erfindungsgemäßen Ausführungsform 12 ist die Haltevorrichtung nach einer ihrer vorhergehenden Ausführungsformen ausgestaltet, wobei die Haltevorrichtung so ausgebildet ist, dass das weitere Halteelement bei dem Überführen der Haltevorrichtung aus dem Haltezustand in den Entnahmezustand so durch das erste Halteelement geführt ist, dass bei diesem Überführen eine Rotationsbewegung des weiteren Halteelements um eine Rotationsachse, die sich entlang der ersten Richtung erstreckt, um mehr als 20°, bevorzugt um mehr als 15°, bevorzugter um mehr als 10°, bevorzugter um mehr als 5°, bevorzugter um mehr als 3°, noch bevorzugter um mehr als 1°, am bevorzugtesten um mehr als 0,5°, unterdrückt wird. In einer bevorzugten Ausgestaltung beinhaltet das weitere Halteelement hierzu einen Teil, der in dem Haltezustand und in dem Entnahmezustand mit dem ersten Halteelement kontaktiert ist, so dass bei dem Überführen der Haltevorrichtung aus dem Haltezustand in den Entnahmezustand die vorstehend beschriebene Rotationsbewegung in dem ebenfalls vorstehend beschriebenen Maß unterdrückt wird. Hierbei gleitet der Teil des weiteren Halteelements bei dem Überführen vorzugsweise an dem ersten Halteelement entlang. In einer weiteren bevorzugten Ausgestaltung beinhaltet das erste Halteelement eine Öffnung, in den ein Teil des Halteelements so eingreift, dass das weitere Halteelement bei dem Überführen geführt ist und somit die vorstehend beschriebene Rotationsbewegung in dem ebenfalls vorstehend beschriebenen Maß unterdrückt wird. In dem oben beschriebenen Fall eines bandförmig ausgebildeten weiteren Halteelements ist der in den vorstehenden Ausgestaltungen der Haltevorrichtung beschriebene Teil des weiteren Halteelements bevorzugt ein bandförmiger Abschnitt des bandförmigen weiteren Halteelements, wobei der Abschnitt vorzugsweise ein endständiger Abschnitt des bandförmigen weiteren Halteelements ist.

In einer erfindungsgemäßen Ausführungsform 13 ist die Haltevorrichtung nach einer ihrer vorhergehenden Ausführungsformen ausgestaltet, wobei das erste Halteelement elektrisch isolierend ist. Bevorzugt besteht das erste Halteelement aus einer Keramik. Dies ermöglicht es insbesondere den elektromagnetischen Strahler ohne zusätzliche elektrisch isolierende Bauteile, wie beispielsweise Keramikscheiben, elektrisch gegen eine Aufhängung oder ein Tragelement zu isolieren. Hierbei eignet sich das vorstehend beschriebene erste Halteelement besonders dazu, aus einem elektrisch isolierenden Material, wie beispielsweise einer Keramik, gefertigt zu werden. Dies gilt besonders, da das erste Halteelement der erfindungsgemäßen Haltevorrichtung nicht elastisch verformbar ausgebildet sein muss. Die elektrische Isolierung des elektromagnetischen Strahlers ist besonders erstrebenswert im Fall eines elektromagnetischen Strahlers, der beispielsweise eine aus Quarzglas gefertigte Blende oder ein zumindest teilweise aus Quarzglas gefertigtes Gehäuse aufweist, wobei der elektromagnetische Strahler bei der Benutzung ausreichend hohe Temperaturen annehmen kann, um dem Material der Blende bzw. des Gehäuses eine unerwünschte elektrische Leitfähigkeit zu verleihen. In diesem Fall ermöglicht das elektrisch isolierende erste Halteelement eine zuverlässige und baulich einfache elektrische Isolierung des elektromagnetischen Strahlers gegenüber einer Aufhängung oder einem Tragelement.

In einer erfindungsgemäßen Ausführungsform 14 ist die Haltevorrichtung nach einer ihrer vorhergehenden Ausführungsformen ausgestaltet, wobei das erste Halteelement dazu ausgebildet ist, mittels Betätigen mindestens eines weiteren Befestigungsmittels, bevorzugt genau eines weiteren Befestigungsmittels, von einer Seite des ersten Halteelements aus, welche einem von der Haltevorrichtung in dem Haltezustand gehaltenen elektromagnetischen Strahler zugewandt ist, an einem Tragelement befestigt zu werden. Hierfür beinhaltet das erste Halteelement bevorzugt ein Durchgangsloch, welches sich von einer Oberfläche des ersten Halteelements, welche zum Zweck des Befestigens an dem Tragelement dazu ausgebildet ist, mit dem Tragelement kontaktiert zu werden, zu einer gegenüberliegenden Oberfläche des ersten Halteelements erstreckt, wobei das Durchgangsloch zum Aufnehmen des weiteren Befestigungsmittels ausgebildet ist. Alternativ oder zusätzlich erstreckt sich das vorgenannte Durchgangsloch von einer Oberfläche des ersten Halteelements, welche einem von der Haltevorrichtung in dem Haltezustand gehaltenen elektromagnetischen Strahler zugewandt ist, zu einer gegenüberliegenden Oberfläche des ersten Halteelements. Bevorzugt liegt die Oberfläche, welche zum Zweck des Befestigens an dem Tragelement dazu ausgebildet ist, mit dem Tragelement kontaktiert zu werden, der Oberfläche, welche einem von der Haltevorrichtung in dem Haltezustand gehaltenen elektromagnetischen Strahler zugewandt ist, gegenüber. Ein bevorzugtes weiteres Befestigungsmittel ist eine Schraube. Im dem Fall, in dem das erste Halteelement als flache Platte ausgebildet ist, erstreckt sich das Durchgangsloch vorzugsweise in einer Plattenebene der flachen Platte durch das erste Halteelement. Das vorstehend beschriebene erste Halteelement ermöglicht es insbesondere, die Haltevorrichtung mit möglichst wenigen Bauteilen an einem Tragelement zu befestigen, was die Montage und auch den Austausch der Haltevorrichtung vereinfacht. Zudem kann sich das Demontieren der vorstehend beschriebenen Haltevorrichtung von dem Tragelement sehr einfach gestalten, da lediglich der elektromagnetische Strahler entfernt und das weitere Befestigungsmittel gelöst werden muss. Zudem kann das weitere Befestigungsmittel, beispielsweis eine Schraube, nach Entfernen des elektromagnetischen Strahlers anwenderseitig in das Durchgangsloch eingeführt oder daraus entfernt werden, was die Montage und auch den Austausch der Haltevorrichtung sehr komfortabel gestaltet im Vergleich zu Haltevorrichtungen des Stands der Technik, deren Montage es verlangt, seitlich an der Haltevorrichtung oder gar an deren Rückseite tätig zu werden.

In einer erfindungsgemäßen Ausführungsform 15 ist die Haltevorrichtung nach einer ihrer vorhergehenden Ausführungsformen ausgestaltet, wobei ein spektraler Anteil der elektromagnetischen Strahlung in einem Bereich von 780 nm bis 1 mm mindestens 50 %, bevorzugt mindestens 60 %, bevorzugter mindestens 70, bevorzugter mindestens 80 %, am bevorzugtesten mindestens 90 %, jeweils einer Strahlungsleistung der elektromagnetischen Strahlung, beinhaltet. Bevorzugt ist der elektromagnetische Strahler ein Infrarotstrahler.

Einen Beitrag zur Erfüllung mindestens einer der erfindungsgemäßen Aufgaben leistet eine Ausführungsform 1 einer Anordnung, beinhaltend als Elemente
a] eine erste Haltevorrichtung, die gemäß der erfindungsgemäßen Haltevorrichtung nach einer ihrer Ausführungsformen ausgebildet ist, und
b] den elektromagnetischen Strahler.
Bevorzugt ist der elektromagnetische Strahler mindestens teilweise von der ersten Haltevorrichtung gehalten, welche sich bevorzugt in dem Haltezustand befindet. Zu dem Halten des elektromagnetischen Strahlers kann die Anordnung zusätzlich mindestens eine weitere Haltevorrichtung beinhalten, welche erfindungsgemäß ausgebildet sein kann, was jedoch nicht in jeder Ausgestaltung der Anordnung zwingend ist. In einer bevorzugten Ausgestaltung beinhaltet die Anordnung die erste Haltevorrichtung und eine nicht erfindungsgemäße weitere Haltevorrichtung, wobei die erste Haltevorrichtung und die weitere Haltevorrichtung zusammen den elektromagnetischen Strahler, bevorzugt jeweils an einem seiner Enden, halten. In einer bevorzugten Ausgestaltung beinhaltet die Anordnung die erste Haltevorrichtung und 2 weitere Haltevorrichtungen, die jeweils bevorzugt nicht erfindungsgemäß ausgebildet sind, wobei die erste Haltevorrichtung und die 2 weiteren Haltevorrichtungen den elektromagnetischen Strahler gemeinsam halten. Hierbei halten die 2 weiteren Haltevorrichtungen den elektromagnetischen Strahler vorzugsweise jeweils an einem seiner Enden und die erste Haltevorrichtung dazwischen, vorzugsweise etwa mittig. Dies ist besonders bevorzugt bei elektromagnetischen Strahlern mit einer Länge von mindestens 2 m, bevorzugter von mindestens 3 m.

In einer erfindungsgemäßen Ausführungsform 2 ist die Anordnung nach ihrer Ausführungsform 1 ausgestaltet, wobei die Anordnung ferner ein Tragelement beinhaltet, wobei das erste Halteelement der ersten Haltevorrichtung starr mit dem Tragelement verbunden ist, vorzugsweise mittels des weiteren Befestigungsmittels wie oben beschrieben. Als Tragelement kommt jedes Bauteil und jede Tragekonstruktion in Betracht, dass und die sich zum Befestigen mindestens eines elektromagnetischen Strahlers, vorzugsweise einer Vielzahl von elektromagnetischen Strahler, mittels Haltevorrichtungen eignet. Grundsätzlich ist ein Tragelement für jede räumliche Orientierung des mindestens durch die erste Haltevorrichtung gehaltenen elektromagnetischen Strahlers denkbar. So kann der elektromagnetische Strahler in der Anordnung beispielsweise von unten oder auch von der Seite mindestens durch die erste Haltevorrichtung gehalten werden. Bevorzugt wird der elektromagnetische Strahler jedoch von oben durch die erste Haltevorrichtung gehalten. Hier ist das Tragelement bevorzugt deckenseitig unter einer Raumdecke vorsehen. Hierbei kann es sich bei dem Tragelement beispielsweise um eine, vorzugsweise abgehängte, Tragedecke oder Deckenkonstruktion handeln, oder um eine oder mehrere unter der Raumdecke verlaufende Trageschienen oder einen oder mehrere Träger oder eine Trägerkonstruktion.

In einer erfindungsgemäßen Ausführungsform 3 ist die Anordnung nach ihrer Ausführungsform 1 oder 2 ausgestaltet, wobei die Anordnung ferner ein Bestrahlungsobjekt, welches dazu angeordnet und ausgebildet ist, mit der elektromagnetischen Strahlung des elektromagnetischen Strahlers bestrahlt zu werden, beinhaltet. Bevorzugt ist das Bestrahlungsobjekt mindestens teilweise auf einer von der ersten Haltevorrichtung abgewandten Seite des elektromagnetischen Strahlers, bevorzugt in der ersten Richtung vor dem elektromagnetischen Strahler, bevorzugt unter diesem, angeordnet. Bevorzugt ist das Bestrahlungsobjekt dazu angeordnet, mit mindestens 50 %, bevorzugter mindestens 60 %, bevorzugter mindestens 70 %, am bevorzugtesten mindestens 80 %, jeweils einer gesamten elektromagnetischen Ausgangsstrahlungsleistung des elektromagnetischen Strahlers, bestrahlt zu werden.

In einer erfindungsgemäßen Ausführungsform 4 ist die Anordnung nach einer ihrer Ausführungsformen 1 bis 3 ausgestaltet, wobei die Anordnung weiter eine Transporteinrichtung beinhaltet, die dazu angeordnet und ausgebildet ist, ein Bestrahlungsobjekt, bevorzugt das vorstehend beschriebene Bestrahlungsobjekt, an eine Bestrahlungsposition zu transportieren, wobei das Bestrahlungsobjekt in der Bestrahlungsposition dazu angeordnet ist, mit der elektromagnetischen Strahlung des elektromagnetischen Strahlers bestrahlt zu werden. In der Bestrahlungsposition ist das Bestrahlungsobjekt vorzugsweise dazu angeordnet, mit mindestens 50 %, bevorzugter mindestens 60 %, bevorzugter mindestens 70 %, am bevorzugtesten mindestens 80 %, jeweils einer gesamten elektromagnetischen Ausgangsstrahlungsleistung des elektromagnetischen Strahlers bestrahlt zu werden. Eine bevorzugte Transporteinrichtung ist ein Bandförderer oder ein Rollenförderer oder beides.

In einer erfindungsgemäßen Ausführungsform 5 ist die Anordnung nach einer ihrer Ausführungsformen 1 bis 4 ausgestaltet, wobei die Anordnung ferner eine Strömungstransporteinrichtung beinhaltet, die dazu angeordnet und ausgebildet ist, ein Gas mittels einer Gasströmung von der Anordnung weg zu transportieren. Eine bevorzugte Strömungstransporteinrichtung ist eine Absauganlage oder eine Kühleinrichtung oder beides. Eine bevorzugte Absauganlage ist zum Absaugen mittels Luft als Trägermedium ausgebildet. Die Kühleinrichtung ist bevorzugt zum Kühlen des elektromagnetischen Strahlers, vorzugsweise mittels Luftkühlung, ausgebildet. Bevorzugt ist die Strömungstransporteinrichtung dazu angeordnet und ausgebildet, das Gas mittels der Gasströmung von dem elektromagnetischen Strahler, was im Fall einer Kühleinrichtung besonders bevorzugt ist, oder von dem Bestrahlungsobjekt, was im Fall einer Absaugeinrichtung besonders bevorzugt ist, weg zu transportieren. Zum Erzeugen der Gasströmung beinhaltet die Strömungstransporteinrichtung bevorzugt eine Strömungsantriebseinrichtung. Eine bevorzugte Strömungsantriebseinrichtung ist ein Ventilator, auch als Gebläse oder Lüfter bezeichnet, oder eine Unterdruckeinheit oder beides. Die Unterdruckeinheit ist bevorzugt dazu ausgebildet, durch Erzeugen eines lokalen Unterdrucks die Gasströmung anzutreiben. Eine bevorzugte Unterdruckeinheit ist eine Pumpe, bevorzugt eine Vakuumpumpe.

In einer erfindungsgemäßen Ausführungsform 6 ist die Anordnung nach ihrer Ausführungsform 5 ausgestaltet, wobei die Strömungstransporteinrichtung mindestens ein Gasstromleitelement beinhaltet, das zu einem Führen der Gasströmung angeordnet und ausgebildet ist. Ein bevorzugtes Gasstromleitelement ist eine Blende oder ein Leitblech oder beides. Hierbei bedeutet der Begriff Leitblech keine Einschränkung des Materials, aus dem das Gasstromleitelement besteht. Bevorzugt umgibt das mindestens eine Gasstromleitelement den mindestens teilweise von der ersten Haltevorrichtung in dem Haltezustand gehaltenen elektromagnetischen Strahler teilweise. Ferner bevorzugt greifen das mindestens eine Gasstromleitelement und die erste Haltevorrichtung ineinander. Bevorzugt ist das Gasstromleitelement an der ersten Haltevorrichtung, vorzugsweise an dem ersten Halteelement, oder an dem Tragelement, oder an beiden befestigt.

In einer erfindungsgemäßen Ausführungsform 7 ist die Anordnung nach ihrer Ausführungsform 5 oder 6 ausgestaltet, wobei das Tragelement eine Vielzahl von Durchgangslöchern für die Gasströmung beinhaltet. Hier befindet sich die Strömungsantriebseinrichtung vorzugsweise auf einer von dem elektromagnetischen Strahler abgewandten Seite des Tragelements.

In einer erfindungsgemäßen Ausführungsform 8 ist die Anordnung nach einer ihrer Ausführungsformen 1 bis 7 ausgestaltet, wobei die Anordnung ferner eine weitere Haltevorrichtung, die gemäß der erfindungsgemäßen Haltevorrichtung nach einer ihrer Ausführungsformen ausgebildet ist, beinhaltet, wobei der elektromagnetische Strahler
A] durch die erste Haltevorrichtung an einer ersten longitudinalen Stelle des elektromagnetischen Strahlers, und
B] durch die weitere Haltevorrichtung an einer weiteren longitudinalen Stelle des elektromagnetischen Strahlers
gehalten ist. Bevorzugt befindet sich die erste longitudinale Stelle des elektromagnetischen Strahlers an einem ersten longitudinalen Ende des elektromagnetischen Strahlers und die weitere longitudinale Stelle des elektromagnetischen Strahlers an einem weiteren longitudinalen Ende des elektromagnetischen Strahlers, wobei das erste longitudinale Ende dem weiteren longitudinalen Ende gegenüber liegt.

In einer erfindungsgemäßen Ausführungsform 9 ist die Anordnung nach einer ihrer Ausführungsformen 1 bis 8 ausgestaltet, wobei die Anordnung eine Trocknungsvorrichtung ist. Eine bevorzugte Trocknungsvorrichtung ist eine Trocknungsvorrichtung einer Druckanlage. Eine bevorzugte Druckanlage beinhaltet eine Druckeinrichtung.

In einer erfindungsgemäßen Ausführungsform 10 ist die Anordnung nach einer ihrer Ausführungsformen 1 bis 8 ausgestaltet, wobei die Anordnung eine Druckeinrichtung beinhaltet. Gemäß der Ausführungsform 10 ist die Anordnung bevorzugt eine Druckanlage.

Einen Beitrag zur Erfüllung mindestens einer der erfindungsgemäßen Aufgaben leistet eine Ausführungsform 1 eines Verfahrens, beinhaltend als Verfahrensschritte
I) ein Bereitstellen
   i) der erfindungsgemäßen Haltevorrichtung nach einer ihrer Ausführungsformen, sowie des elektromagnetischen Strahlers, oder
   ii) der erfindungsgemäßen Anordnung nach einer ihrer Ausführungsformen; und
II) ein Bestrahlen eines Bestrahlungsobjekts mit der elektromagnetischen Strahlung;
wobei der elektromagnetische Strahler in dem Verfahrensschritt II) mindestens teilweise von der Haltevorrichtung in dem Haltezustand gehalten wird. Bevorzugt wird das Bestrahlungsobjekt in dem Verfahrensschritt II) mit mindestens 50 %, bevorzugter mindestens 60 %, bevorzugter mindestens 70 %, am bevorzugtesten mindestens 80 %, jeweils einer gesamten elektromagnetischen Ausgangsstrahlungsleistung des elektromagnetischen Strahlers bestrahlt. Bevorzugt ist das Verfahren ein Verfahren zum Bestrahlen des Bestrahlungsobjekts mit der elektromagnetischen Strahlung. Ferner bevorzugt erfolgt das Bestrahlen in dem Verfahrensschritt II) zu einem, ausgewählt aus der Gruppe, bestehend aus einem Trocknen, einem Härten, einem Formen, einem Prägen, einem Laminieren, einem Fügen, einem Schweißen, einem Anbräunen, einem Erwärmen, einem Aufheizen, einem Vorwärmen, und einer Keimreduzierung, oder eine Kombination aus mindestens zwei davon.

In einer erfindungsgemäßen Ausführungsform 2 ist das Verfahren nach seiner Ausführungsform 1 ausgestaltet, wobei der Verfahrensschritt II) eines, ausgewählt aus der Gruppe, bestehend aus einem physikalischen Modifizieren, einem chemischen Modifizieren, und einem biologischen Modifizieren, oder eine Kombination aus mindestens zwei davon beinhaltet. Ein bevorzugtes physikalisches Modifizieren beinhaltet eines, ausgewählt aus der Gruppe, bestehend aus einem Verformen, einem Fügen, einem Einstellen einer Oberflächenspannung, und einem Verdampfen, oder eine Kombination aus mindestens zwei davon. Ein bevorzugtes Verformen ist ein Tiefziehen oder ein Prägen oder beides. Ein bevorzugtes Fügen ist ein Schweißen oder ein Laminieren oder beides. Ein bevorzugtes chemisches Modifizieren beinhaltet eine chemische Reaktion. Eine bevorzugte chemische Reaktion ist eine Polymerisationsreaktion oder eine Vernetzungsreaktion oder beides. Ein bevorzugtes biologisches Modifizieren beinhaltet ein Reduzieren einer Keimzahl mittels Bestrahlen mit der elektromagnetischen Strahlung.

In einer erfindungsgemäßen Ausführungsform 3 ist das Verfahren nach seiner Ausführungsform 1 ausgestaltet, wobei der Verfahrensschritt II) ein Verringern eines Anteils einer Flüssigkeit in dem Bestrahlungsobjekt mittels des Bestrahlens mit der elektromagnetischen Strahlung beinhaltet. Bevorzugt beinhaltet das Bestrahlungsobjekt ein, vorzugsweise flächenförmiges, Substrat und eine Zusammensetzung. In einer bevorzugten Ausgestaltung beinhaltet das, vorzugsweise flächenförmige, Substrat die Zusammensetzung. In einer weiteren bevorzugten Ausgestaltung überlagert die Zusammensetzung das Substrat, vorzugsweise auf einer dem elektromagnetischen Strahler in dem Verfahrensschritt II) zugewandten Seite des Substrats. Die Zusammensetzung beinhaltet bevorzugt die Flüssigkeit, bevorzugter ist die Flüssigkeit die Zusammensetzung. Der Verfahrensschritt II) beinhaltet vorzugweise ein Verdampfen eines Lösungsmittels oder eine chemische Reaktion. Eine bevorzugte chemische Reaktion beinhaltet ein mindestens teilweises Umwandeln einer Flüssigkeit in einen Feststoff. Alternativ oder zusätzlich ist eine bevorzugte chemische Reaktion eine ausgewählt aus der Gruppe, bestehend aus einer Härtungsreaktion, einer Polymerisationsreaktion, und einer Vernetzungsreaktion, oder eine Kombination aus mindestens zwei davon.

In einer erfindungsgemäßen Ausführungsform 4 ist das Verfahren nach einer seiner Ausführungsformen 1 bis 3 ausgestaltet, wobei das Verfahren weiter in einem Verfahrensschritt III) ein Verformen des Bestrahlungsobjekts beinhaltet. Ein bevorzugtes Verformen ist ein Tiefziehen oder ein Prägen oder beides. Hierbei kann der Verfahrensschritt III) zeitlich nach dem Verfahrensschritt II), zeitlich damit überlappend oder zeitgleich erfolgen.

In einer erfindungsgemäßen Ausführungsform 5 ist das Verfahren nach einer seiner Ausführungsformen 1 bis 4 ausgestaltet, wobei das Bestrahlen in dem Verfahrensschritt II) zu einer Bestrahlungsdauer in einem Bereich von 10 ms bis 1min, bevorzugt von 10 ms bis 30 s, bevorzugter von 10 ms bis 10 s, bevorzugter von 10 ms bis 10 s, bevorzugter von 10 ms bis 1 s, bevorzugter von 30 bis 500 ms, noch bevorzugter von 50 bis 200 ms, am bevorzugtesten von 100 bis 200 ms. Hierbei erfolgt das Bestrahlen bevorzugt kontinuierlich, besonders bevorzugt in einer Druckmaschine. Dies bedeutet, dass mindestens der elektromagnetische Strahler, bevorzugt eine Vielzahl von elektromagnetischen Strahlern, zu dem Bestrahlen kontinuierlich betrieben wird und das Bestrahlungsobjekt so an dem elektromagnetischen Strahler vorbeigeführt wird, bevorzugt darunter hinweg, dass es mit der elektromagnetischen Strahlung für eine definierte Bestrahlungsdauer bestrahlt wird. Alternativ kann das Bestrahlen auch batchweise erfolgen. Hierbei wird der elektromagnetische Strahler nicht kontinuierlich betrieben, sondern die Bestrahlungsdauer durch Regeln der Abgabe der elektromagnetischen Strahlung durch den Strahler, beispielsweise durch Ein- und Ausschalten des Strahlers, eingestellt. Insbesondere in diesem Fall kann die Bestrahlungsdauer bei bis zu 1 min liegen.

In einer erfindungsgemäßen Ausführungsform 6 ist das Verfahren nach einer seiner Ausführungsformen 1 bis 5 ausgestaltet, wobei das Verfahren vor dem Verfahrensschritt II) ein Überlagern eines Substrats mit einer Zusammensetzung unter Erhalt des Bestrahlungsobjekts beinhaltet. Vorzugsweise beinhaltet die Zusammensetzung die Flüssigkeit. Die Flüssigkeit ist bevorzugt ein Lösungsmittel. Ein bevorzugtes Lösungsmittel ist Wasser oder ein organisches Lösungsmittel oder beides. Die Zusammensetzung ist bevorzugt eines, ausgewählt aus der Gruppe, bestehend aus einer Druckfarbe, einer Tinte, einer Leitpaste und einem Lack, oder eine Kombination aus mindestens zwei davon. Hier ist das erfindungsgemäße Verfahren bevorzugt ein Verfahren zum Bedrucken oder Beschichten oder beides des Substrats. Das Bedrucken erfolgt bevorzugt zum Herstellen eines Druckerzeugnisses.

Einen Beitrag zur Erfüllung mindestens einer der erfindungsgemäßen Aufgaben leistet eine Ausführungsform 1 eines Druckerzeugnisses, erhältlich durch das erfindungsgemäße Verfahren nach einer seiner Ausführungsformen. Als Druckerzeugnis kommt erfindungsgemäß jedes Druckerzeugnis in Betracht, welches dem Fachmann bekannt ist und durch das erfindungsgemäße Verfahren erhältlich erscheint. Ein bevorzugtes Druckerzeugnis ist ausgewählt aus der Gruppe, bestehend aus einem Printmedium, einem Verpackungsmittel, und einem bedruckten Bauteil, oder aus einer Kombination aus mindestens zwei davon. Ein bevorzugtes Printmedium ist eine gedruckte Informationsquelle wie beispielsweise eines, ausgewählt aus der Gruppe, bestehend aus einer Zeitschrift, einem Buch, einer Zeitung, einer Broschüre, einer Fotographie, einer Karte, einem Plan, einem Katalog, und einem Poster, oder eine Kombination aus mindestens zwei davon. Ein bevorzugtes bedrucktes Bauteil ist ein elektronisches Bauteil. Das Druckerzeugnis ist vorzugsweise mittels Bedrucken eines Substrats mit einem Druckmittel erhältlich, wobei das Druckmittel die Flüssigkeit beinhaltet. Ein bevorzugtes Druckmittel ist flüssig. Ein bevorzugtes flüssiges Druckmittel ist eines, ausgewählt aus der Gruppe, bestehend aus einer Druckfarbe, einer Drucktinte, einem Lack, und einer elektrisch leitfähigen Paste, oder eine Kombination aus mindestens zwei davon.

Einen Beitrag zur Erfüllung mindestens einer der erfindungsgemäßen Aufgaben leistet eine Ausführungsform 1 einer Verwendung 1 der erfindungsgemäßen Haltevorrichtung nach einer ihrer Ausführungsformen zu einem Halten des elektromagnetischen Strahlers. Hierbei ist der elektromagnetische Strahler vorzugsweise von einer Trocknungsanlage, bevorzugt einer Druckanlage, beinhaltet.

Einen Beitrag zur Erfüllung mindestens einer der erfindungsgemäßen Aufgaben leistet eine Ausführungsform 1 einer Verwendung 2 der erfindungsgemäßen Anordnung nach einer ihrer Ausführungsformen in der Herstellung eines Druckerzeugnisses.

Merkmale, welche in einer erfindungsgemäßen Kategorie als bevorzugt beschrieben sind, sind ebenso in einer Ausführungsform der weiteren erfindungsgemäßen Kategorien bevorzugt.

### Elektromagnetischer Strahler

Als elektromagnetischer Strahler kommt erfindungsgemäß jede technische Einrichtung zur Emission elektromagnetischer Strahlung eines definierten Spektrums in Betracht. Ein elektromagnetischer Strahler beinhaltet vorzugsweise ein die elektromagnetische Strahlung abstrahlendes Emissionsmedium. Ein bevorzugtes Emissionsmedium ist ein Festkörper oder ein Gas oder beides. Ein bevorzugtes Gas ist ein Edelgas oder ein Metalldampf oder beides. Ein bevorzugter Festkörper ist ein Glühdraht oder ein Halbleiter oder beides. Ein bevorzugter elektromagnetischer Strahler ist eine Infrarotstrahler (IR-Strahler) oder ein Ultraviolettstrahler (UV-Strahler) oder beides. Erfindungsgemäß ist jedoch auch ein elektromagnetischer Strahler für sichtbares Licht denkbar. Geeignete IR-Strahler sind beispielsweise unter den Bezeichnungen "*Carbon Infrarotstrahler CIR*®", "*Infrarot Zwillingsrohrstrahler Goldene 8*", "*Infrarot-Rundrohrstrahler*", "*QRC*® *(quartz reflective coating) Infrarot-Strahler mit Nanoreflektor",* "*Infralight NIR-Strahler"* und "*IP 65 Infrarot-Strahler"* von Heraeus Noblelight GmbH, Hanau, Deutschland kommerziell erhältlich. Ein IR-Strahler ist bevorzugt durch ein Ausgangsspektrum in einem Bereich von 780 nm bis 1 mm, bevorzugter von 780 nm bis 50 µm, bevorzugter von 800 nm bis 10 µm, bevorzugter von 800 nm bis 5 µm, am bevorzugtesten von 800 nm bis 3 µm, gekennzeichnet. IR-Strahler und Module, beinhaltend einen oder mehrere IR-Strahler, werden beispielsweise in zahlreichen industriellen Wärmeprozessen eingesetzt. Hierzu gehören beispielsweise Trocknen und Härten von Beschichtungen, Formen, Prägen, Laminieren, Fügen, Schweißen, Anbräunen, Erwärmen, Aufheizen, Vorwärmen, Keimreduzierung. Ein UV-Strahler ist bevorzugt durch ein Ausgangsspektrum in einem Bereich von 10 nm bis 380 nm gekennzeichnet. Vorstehend hat der genannte Strahler ein Spektrum in dem genannten Bereich, wenn mindestens 50 %, bevorzugter mindestens 60 %, bevorzugter mindestens 70 %, noch bevorzugter mindestens 80 %, am bevorzugtesten mindestens 90 %, der Ausgangsstrahlungsleistung des Strahlers bei einer oder mehreren Wellenlängen in dem Bereich liegen.

Bevorzugt hat der elektromagnetische Strahler eine Länge in einem Bereich von 10 cm bis 5 m, bevorzugter von 30 cm bis 3 m, am bevorzugtesten von 0,5 m bis 1,5 m. Alternativ oder zusätzlich bevorzugt hat der elektromagnetische Strahler eine Breite in einem Bereich von 10 bis 50 cm, bevorzugter von 10 bis 35 cm, am bevorzugtesten von 10 bis 20 cm. Die Breite des elektromagnetischen Strahlers bemisst sich vorzugsweise von der ersten Seite des elektromagnetischen Strahlers zu seiner weiteren Seite. Bevorzugt sind die erste Seite und die weitere Seite des elektromagnetischen Strahlers beides jeweils longitudinale Seiten des elektromagnetischen Strahlers, sie erstrecken sich also jeweils bevorzugt entlang der Länge des elektromagnetischen Strahlers. Besonders bevorzugt ist der elektromagnetische Strahler ein Doppelrohrstrahler. Dies bedeutet, dass der elektromagnetische Strahler zwei Strahlungsquellen in jeweils längserstreckten entlang einer Richtung ihrer Längserstreckung benachbart angeordneten Kammern beinhaltet.

### Bestrahlungsobjekt

Als Bestrahlungsobjekt kommt grundsätzlich jedes Objekt in Betracht, welches mittels Bestrahlen mit der elektromagnetischen Strahlung des elektromagnetischen Strahlers, modifiziert werden kann. Hierbei kann das Bestrahlen selbst die Modifizierung auslösen oder diese ermöglichen. Das Modifizieren kann hierbei eines, ausgewählt aus der Gruppe, bestehend aus einem physikalischen Modifizieren, einem chemisches Modifizieren, und einem biologischen Modifizieren, oder eine Kombination aus mindestens zwei davon sein. Ein bevorzugtes physikalisches Modifizieren beinhaltet eines, ausgewählt aus der Gruppe, bestehend aus einem Verformen, einem Fügen, einem Einstellen einer Oberflächenspannung, und einem Verdampfen, oder eine Kombination aus mindestens zwei davon. Ein bevorzugtes Verformen ist ein Tiefziehen oder ein Prägen oder beides. Ein bevorzugtes Fügen ist ein Schweißen oder ein Laminieren oder beides. Ein bevorzugtes chemisches Modifizieren beinhaltet eine chemische Reaktion. Eine bevorzugte chemische Reaktion ist eine Polymerisationsreaktion oder eine Vernetzungsreaktion oder beides. Ein bevorzugtes biologisches Modifizieren beinhaltet ein Reduzieren einer Keimzahl mittels Bestrahlen mit der elektromagnetischen Strahlung. Bevorzugt beinhaltet das Bestrahlungsobjekt ein, vorzugsweise flächenförmiges, Substrat und eine Zusammensetzung. Hierbei ist die Anordnung besonders bevorzugt dazu ausgebildet, die Zusammensetzung mit der elektromagnetischen Strahlung zu bestrahlen. In einer bevorzugten Ausgestaltung beinhaltet das, vorzugsweise flächenförmige, Substrat die Zusammensetzung. In einer weiteren bevorzugten Ausgestaltung überlagert die Zusammensetzung das Substrat mindestens teilweise auf einer dem elektromagnetischen Strahler zugewandten Seite des Substrats. Die Zusammensetzung beinhaltet bevorzugt eine Flüssigkeit, bevorzugter ist die Zusammensetzung eine Flüssigkeit. Die Flüssigkeit beinhaltet bevorzugt ein Lösungsmittel oder einen Initiator für eine chemische Reaktion oder beides. Bevorzugter ist die Flüssigkeit ein Lösungsmittel oder ein Initiator für eine chemische Reaktion oder beides. Im Fall eines Lösungsmittels ist die Anordnung, vorzugsweise der elektromagnetische Strahler, besonders bevorzugt hinsichtlich seiner Ausgangsstrahlungsleistung oder hinsichtlich des Spektrums der elektromagnetischen Strahlung oder beides, bevorzugt dazu ausgebildet, das Lösungsmittel mittels Bestrahlen des Bestrahlungsobjekts mit der elektromagnetischen Strahlung mindestens teilweise zu verdampfen. Ein bevorzugtes Lösungsmittel ist Wasser oder ein organisches Lösungsmittel oder beides. Im Fall eines Initiators für eine chemische Reaktion ist die Anordnung, vorzugsweise der elektromagnetische Strahler, besonders bevorzugt hinsichtlich seiner Ausgangsstrahlungsleistung oder hinsichtlich des Spektrums der elektromagnetischen Strahlung oder beides, bevorzugt dazu ausgebildet, die chemische Reaktion mittels Bestrahlen des Bestrahlungsobjekts mit der elektromagnetischen Strahlung zu initiieren. Ein bevorzugtes flächenförmiges Substrat ist beinhaltet eine faserhaltiges Material wie beispielsweise Papier, Pappe, Karton, oder Flies wie beispielsweise für Sanitärartikel wie Windeln oder Damenbinden. Besonders bevorzugt besteht das Substrat aus dem faserhaltigen Material. Ein weiteres bevorzugtes flächenförmiges Substrat ist eine Folie, bevorzugt eine Polymerfolie, oder ein Laminat, beinhaltend mehrere Schichten wie beispielsweise Polymerschichten. Eine bevorzugte Zusammensetzung ist ausgewählt aus der Gruppe, bestehend aus einer Druckfarbe, einer Tinte, und einem Lack, oder eine Kombination aus mindestens zwei davon. Eine bevorzugte Tinte ist eine Dispersionstinte. In einer erfindungsgemäßen Ausgestaltung ist das Bestrahlungsobjekt ein mit einer Drucktinte bedruckter Bedruckstoff. In einer weiteren erfindungsgemäßen Ausgestaltung ist das Bestrahlungsobjekt ein wasserhaltiges Objekt wie beispielsweise ein Flies, welches durch Bestrahlen mit der elektromagnetischen Strahlung getrocknet werden kann. In einer weiteren erfindungsgemäßen Ausgestaltung ist das Bestrahlungsobjekt ein mit einem Schutzlack überlagertes Substrat, wobei der Schutzlack durch Bestrahlen mit der elektromagnetischen Strahlung gehärtet werden kann. In einer weiteren erfindungsgemäßen Ausgestaltung ist das Bestrahlungsobjekt ein Rohling, welcher durch Bestrahlen mit der elektromagnetischen Strahlung mindestens teilweise verformbar gemacht werden kann, so dass der Rohling beispielsweise durch Tiefziehen zu einem Formkörper verarbeitet werden kann oder geprägt werden kann.

### Trocknungsvorrichtung

Als Trocknungsvorrichtung kommt erfindungsgemäße jede Vorrichtung, die dem Fachmann zum Trocknen mittels Bestrahlen mit der elektromagnetischen Strahlung geeignet erscheint, in Betracht. Eine bevorzugte Trocknungsvorrichtung ist ausgebildet zum Trocknen eines bedruckten Bedruckstoffs. Im Gebiet des Druckens wird der Begriff Trocknen für alle Vorgänge benutzt, die zur Verfestigung von Druckfarben oder Drucktinten führen. Dazu zählen Trocknungsvorgänge, in denen Wasser aus der Druckfarbe entfernt wird, auch das Austreiben anderer Flüssigkeiten, wie andere Lösungsmittel oder Mineralöle, wird eingeschlossen. Auch chemische Vernetzungsvorgänge ("*UV-Trocknung*") werden als Trocknen bezeichnet. Das Trocknen ist außer für Druckfarben auch für Toner und Tinten im Digitaldruck, für Lacke und für Anstrichfarben üblich.

### Druckeinrichtung

Eine bevorzugte Druckeinrichtung ist zu einem Bedrucken eines Vorläufers des Bestrahlungsobjekts, bevorzugt des vorzugsweise flächenförmigen Substrats, bevorzugt mit der Zusammensetzung, unter Erhalt des Bestrahlungsobjekts angeordnet und ausgebildet. Die Druckeinrichtung ist vorzugsweise in einer Stromrichtung eines Druckverfahrens, stromaufwärts des elektromagnetischen Strahlers angeordnet. Eine bevorzugte Druckeinrichtung beinhaltet mindestens eine Düse oder einen Druckbildspeicher oder beides. Die mindestens eine Düse, bevorzugt die mehreren Düsen, ist/sind bevorzugt von einem Druckkopf beinhaltet. Ein bevorzugter Druckkopf ist ein Tintenstrahldruckkopf. Ein bevorzugter Druckbildspeicher ist eine Druckwalze oder eine Druckplatte oder beides. Eine bevorzugte Druckwalze ist eine, ausgewählt aus der Gruppe, bestehend aus einer Tiefdruckwalze, einer Flexodruckwalze, einer Offsetdruckwalze, und einer Druckwalze für den Hochdruck, oder eine Kombination aus mindestens zwei davon. Eine bevorzugte Druckplatte ist eine, ausgewählt aus der Gruppe, bestehend aus einer Tiefdruckplatte, einer Flexodruckplatte, einer Offsetdruckplatte, und einer Druckplatte für den Hochdruck, oder eine Kombination aus mindestens zwei davon

### MESSMETHODEN

Die folgende Messmethode wurde im Rahmen der Erfindung benutzt. Sofern nichts anderes angegeben ist wurden die Messungen bei einer Umgebungstemperatur von 23°C, einem Umgebungsluftdruck von 100 kPa (0,986 atm) und einer relativen Luftfeuchtigkeit von 50 % durchgeführt.

### Elektromagnetische Ausgangsstrahlungsleistung

Die elektromagnetische Ausgangsstrahlungsleistung eines elektromagnetischen Strahlers wird im Falle eines Strahlers mit Halbleiterlichtquelle mittels einer Messanordnung mit Ulbrichtkugel bestimmt. Hierzu wird in der Ulbrichtkugel der gesamte Lichtstrom des Strahlers gemessen. Dieser gesamte Lichtstrom entspricht der elektromagnetischen Ausgangsstrahlungsleistung. Um die elektromagnetische Ausgangsstrahlungsleistung eines Strahlers mit einer thermischen Lichtquelle zu bestimmen, wird die elektrische Leistungsaufnahme des Strahlers gemessen und der der elektromagnetischen Ausgangsstrahlungsleistung gleich gesetzt.

Die Erfindung wird im Folgenden durch Beispiele und Zeichnungen genauer dargestellt, wobei die Beispiele und Zeichnungen keine Einschränkung der Erfindung bedeuten. Ferner sind die Zeichnungen, sofern nicht anders angegeben, nicht maßstabsgetreu.

Es zeigen jeweils sofern nicht anders in der Beschreibung oder der jeweiligen Figur angegeben schematisch und nicht maßstabsgetreu:
- Figur 1: eine schematische Darstellung einer erfindungsgemäßen Anordnung mit zwei erfindungsgemäßen Haltevorrichtungen;
- Figur 2: eine schematische Darstellung einer weiteren erfindungsgemäßen Anordnung mit zwei erfindungsgemäßen Haltevorrichtungen im Haltezustand und zwei erfindungsgemäßen Haltevorrichtungen im Entnahmezustand;
- Figur 3: eine schematische Detailansicht einer erfindungsgemäßen Haltevorrichtung;
- Figur 4: eine transparente Darstellung eines ersten Halteelements einer erfindungsgemäßen Haltevorrichtung;
- Figur 5: eine schematische Darstellung einer weiteren erfindungsgemäßen Anordnung mit erfindungsgemäßen Haltevorrichtungen;
- Figur 6: eine schematische Darstellung einer weiteren erfindungsgemäßen Anordnung mit erfindungsgemäßen Haltevorrichtungen;
- Figur 7: ein Ablaufdiagramm eines erfindungsgemäßen Verfahrens;
- Figur 8: ein erfindungsgemäßes Druckerzeugnis; und
- Figur 9: eine schematische Darstellung einer nicht erfindungsgemäßen Haltevorrichtung.

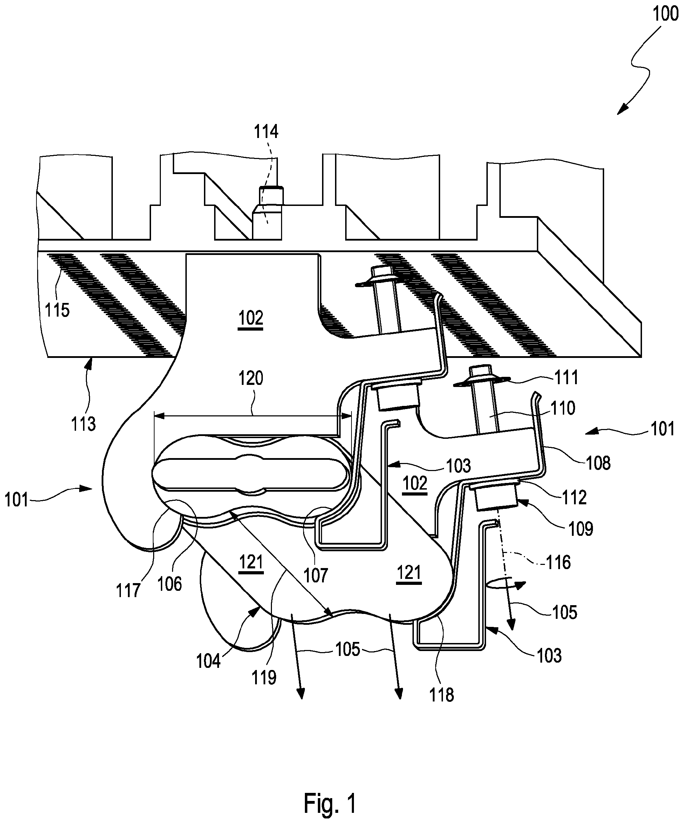

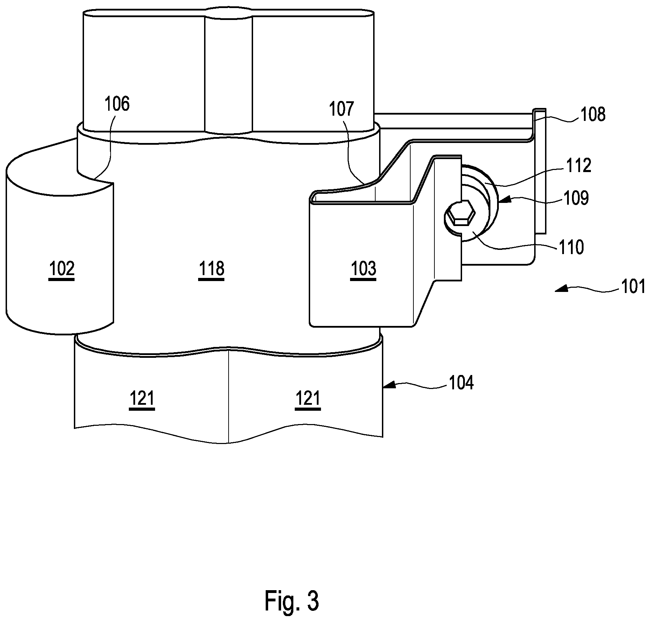

Figur 1 zeigt eine schematische Darstellung einer erfindungsgemäßen Anordnung 100 mit zwei erfindungsgemäßen Haltevorrichtungen 101. Jede der beiden Haltevorrichtungen 101 beinhaltet ein erstes Halteelement 102 und ein weiteres Halteelement 103. Die ersten Halteelemente 102 und die weiteren Halteelemente sind jeweils einstückig ausgebildet. Die ersten Halteelemente 102 sind jeweils als flache Platten aus Keramik ausgebildet und demnach elektrisch isolierend. Die weiteren Halteelemente 103 sind jeweils bandförmig ausgebildet und durch Biegen aus einem Flachstahl gefertigt. Die Haltevorrichtungen 101 sind jeweils dazu ausgebildet, reversibel aus einem Haltezustand in einen Entnahmezustand überführt zu werden. In Figur 1 befinden sich die Haltevorrichtungen 101 im Haltezustand. Die Haltevorrichtungen 101 sind dazu ausgebildet, in dem in Figur 1 gezeigten Haltezustand einen elektromagnetischen Strahler 104 mittels eines Formschlusses des elektromagnetischen Strahlers 104 mit jeweils dem ersten Halteelement 102 und dem weiteren Halteelement 103 einer Haltevorrichtung 101 so zu halten, dass der elektromagnetische Strahler 104 dazu angeordnet ist, elektromagnetische Strahlung in eine erste Richtung 105 abzustrahlen. Ferner sind die Haltevorrichtungen 101 jeweils so ausgebildet, dass der Formschluss in dem Entnahmezustand 201 gelöst ist und ein Überführen der jeweiligen Haltevorrichtung 101 aus dem Haltezustand in den Entnahmezustand ein Bewegen des jeweiligen weiteren Halteelements 103 relativ zu dem ersten Halteelement 102 in der ersten Richtung 105 beinhaltet. Der elektromagnetische Strahler 104 ist hier ein IR-Strahler, welcher als Doppelrohrstrahler mit 2 jeweils einen Glühdraht als Emissionsmedium enthaltenden Kammern 121. Der elektromagnetische Strahler hat eine Breite 120 von 25 cm und eine Länge 119 von 1 m. Der elektromagnetische Strahler 104 wird von jeweils einer der Haltevorrichtungen 101 an einer ersten longitudinalen Stelle 117 und einer weiteren longitudinalen Stelle 118, die sich jeweils an entgegengesetzten longitudinalen Enden des elektromagnetischen Strahlers 104 befinden, gehalten. Ferner hat der elektromagnetische Strahler 104 eine erste Seite und eine entlang seiner Breite 120 der ersten Seite gegenüberliegende weitere Seite. Die ersten Halteelemente 102 beinhalten jeweils eine erste Oberflächenform 106, die dazu ausgebildet ist, in dem Haltezustand den elektromagnetischen Strahler 104 auf seiner ersten Seite aufzunehmen. Weiter beinhalten die weiteren Halteelemente 103 jeweils eine weitere Oberflächenform 107, die dazu ausgebildet ist, in dem Haltezustand den elektromagnetischen Strahler 104 auf seiner weiteren Seite aufzunehmen. Die erste Oberflächenform 106 und die weitere Oberflächenform 107 der jeweiligen Haltevorrichtung 101 bilden zusammen den Formschluss mit dem elektromagnetischen Strahler 104. Die beiden Haltevorrichtungen 101 beinhalten jeweils zusätzlich ein erstes Befestigungsmittel 109, welches das jeweilige erste Halteelement 102 und das jeweilige weitere Halteelement 103 in dem Haltezustand fest, das heißt fixierend, und in dem Entnahmezustand nicht fest, das heißt die Bewegung der Elemente zueinander nur einschränkend, miteinander verbindet. Die ersten Befestigungsmittel 109 beinhalten jeweils eine Schraube 110, welche in ein Gewinde in dem ersten Halteelement 102 eingreift, eine Gewindesicherungsscheibe 111 und eine Unterlegscheibe 112. Die beiden Haltevorrichtungen 101 sind jeweils so ausgebildet ist, dass das Überführen der Haltevorrichtung 101 aus dem Haltezustand in den Entnahmezustand ein Bewegen des jeweiligen ersten Befestigungsmittels 109 relativ zu dem jeweiligen ersten Halteelement 102 in der ersten Richtung 105 beinhaltet. Diese Bewegung kann durch Rausdrehen der Schraube 110 realisiert werden. Hierbei ist ein Schraubenkopf der Schraube 110 des ersten Befestigungsmittel 109 jeweils mindestens teilweise zwischen Bandabschnitten des jeweiligen bandförmigen weiteren Halteelements 103 angeordnet (vgl. Figur 3), so dass der Schraubenkopf bei einem Herausdrehen der Schraube 110 aus dem ersten Halteelement 102 das weitere Halteelement 103 in die erste Richtung 105 mitnimmt und so in die erste Richtung 105 bewegt. Hierdurch wird die Haltevorrichtung 101 beim Herausdrehen der Schraube 110 automatisch von dem Haltezustand in den Entnahmezustand überführt. Beim Reindrehen der Schraube 110 in das erste Halteelement 102 nimmt der Schraubenkopf ebenfalls das weitere Halteelement 103 in die erste Richtung mit und überführt so automatisch die Haltevorrichtung 101 von dem Entnahmezustand in den Haltezustand. Ferner weist das weitere Halteelement 103 einen Teil 108 auf, der bei dem Reindrehen der Schraube 110 zum Überführen der Haltevorrichtung 101 aus dem Entnahmezustand in den Haltezustand und dem Rausdrehen der Schraube 110 zum Überführen der Haltevorrichtung 101 aus dem Haltezustand in den Entnahmezustand das erste Halteelement 102 kontaktierend an diesem entlang gleitet und hierdurch so geführt ist, dass bei dem vorgenannten Überführen der Haltevorrichtung eine Rotationsbewegung des weiteren Halteelements 103 um eine Rotationsachse 116, die sich entlang der ersten Richtung 105 erstreckt, vollständig unterdrückt wird. Die beiden ersten Halteelemente 102 sind jeweils mittels eines weiteren Befestigungsmittels 114 an einem Tragelement 113, welches eine abgehängte Trägerdecke ist befestigt. Das Tragelement 113 beinhaltet eine Vielzahl von Durchgangslöchern 115, die eine Luftströmung einer Luftkühlung oder einer Absauganlage passieren lassen können.

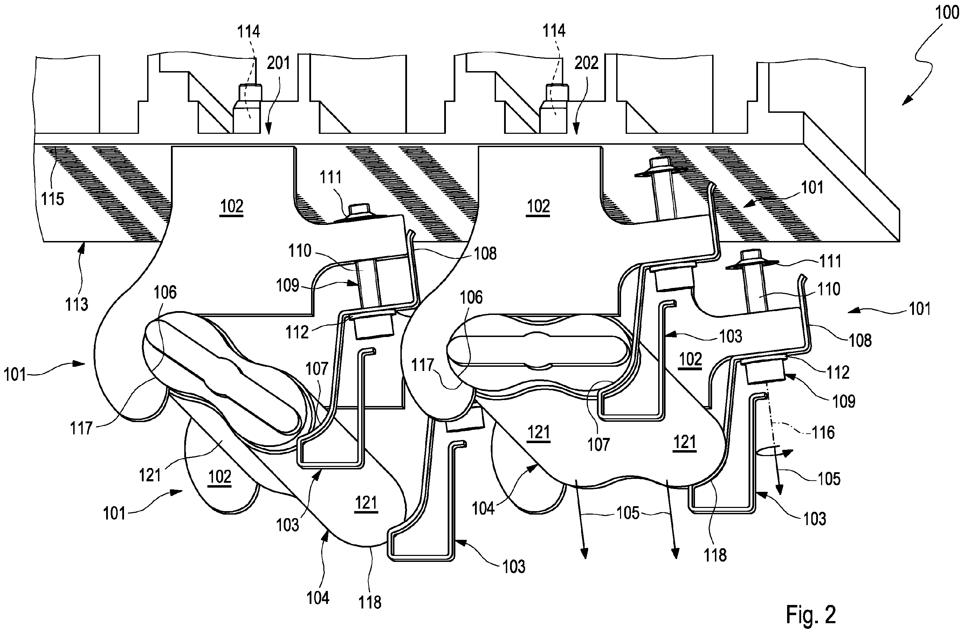

Figur 2 zeigt eine schematische Darstellung einer weiteren erfindungsgemäßen Anordnung 100 mit zwei erfindungsgemäßen Haltevorrichtungen im Haltezustand 202 und zwei erfindungsgemäßen Haltevorrichtungen im Entnahmezustand 201. Die beiden gezeigten Haltevorrichtungen im Haltezustand 202 sind identisch zu den in Figur 1 gezeigten Haltevorrichtungen 101. Ferner bilden diese beiden Haltevorrichtungen im Haltezustand 202 mit einem elektromagnetischen Strahler 104 zusammen die in Figur 1 gezeigte Anordnung 100. Die beiden in Figur 2 gezeigten Haltevorrichtungen im Entnahmezustand 201 unterscheiden sich von den Haltevorrichtungen im Haltezustand 202 lediglich dadurch, dass die Schrauben 110 der ersten Befestigungsmittel 109 herausgedreht wurden und somit in die erste Richtung 105 bewegt wurden, wodurch automatisch die weiteren Halteelemente 103 in die erste Richtung 105 von den ersten Halteelementen 102 wegbewegt wurden, um so diese Haltevorrichtungen aus dem Haltezustand 202 in den in Figur 2 gezeigten Entnahmezustand 201 zu überführen.

Figur 3 zeigt eine schematische Detailansicht einer erfindungsgemäßen Haltevorrichtung 101. Die Haltevorrichtung 101 ist ein der in Figur 1 gezeigten Haltevorrichtungen 101 im Haltezustand. In der in Figur 3 gezeigten Untersicht ist zu erkennen, dass der Schraubenkopf der Schraube 110 zwischen Bandabschnitten des weiteren Halteelements 103 angeordnet ist. Ferner ist zu erkennen, dass der Schraubenkopf dennoch anwenderseitig gut für einen herkömmlichen Inbusschraubendreher zugänglich ist, so dass die Schraube 110 in die erste Richtung 105 (aus der Bildebene heraus) herausgedreht werden kann, um so sehr komfortabel und wenig fehleranfällig die Haltevorrichtung 101 aus dem Haltezustand in den Entnahmezustand zu überführen.

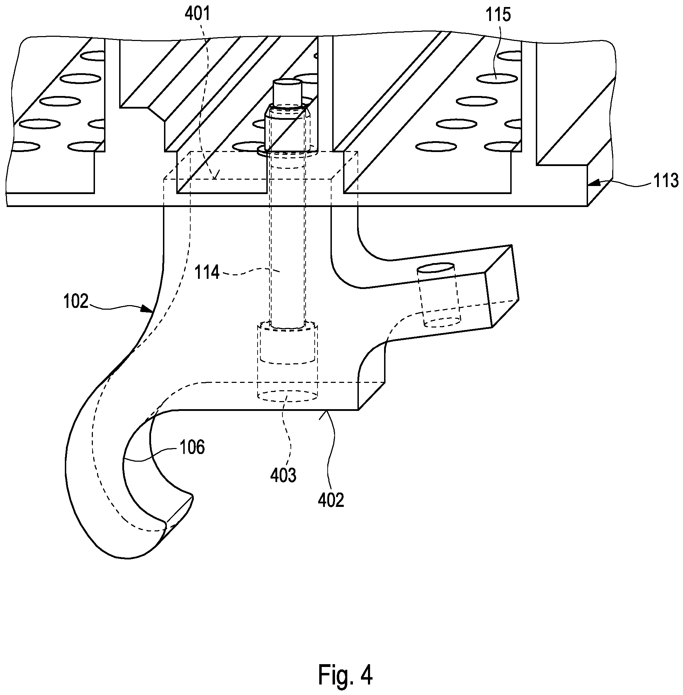

Figur 4 zeigt eine transparente Darstellung eines ersten Halteelements 102 einer erfindungsgemäßen Haltevorrichtung 101. Gezeigt ist das erste Halteelement 102 einer der Haltevorrichtungen 101 der Figur 1. In der transparenten Darstellung ist die Befestigung des ersten Halteelements 102 mittels des weiteren Befestigungsmittels 114 an dem Tragelement 113 gut zu erkennen. Das erste Halteelement 102 beinhaltet ein Durchgangsloch 403, welches sich von einer Oberfläche 401 des ersten Halteelements 102, welche zum Zweck des Befestigens an dem Tragelement 113 eben ausgebildet, um mit dem Tragelement 113 kontaktiert zu werden, zu einer gegenüberliegenden Oberfläche 402 des ersten Halteelements 102, welche einem von der Haltevorrichtung 101 in dem Haltezustand gehaltenen elektromagnetischen Strahler 104 (nicht gezeigt) zugewandt ist, erstreckt. Folglich verläuft das Durchgangsloch 403 in der Plattenebene des ersten Halteelements 102. Das Durchgangsloch 403 ist zum Aufnehmen des weiteren Befestigungsmittels 114, welches eine Schraube ist, ausgebildet. Folglich kann das erste Halteelement 102 mittels Betätigen des weiteren Befestigungsmittels 114 mit einem üblichen Schraubendreher von einer Seite des ersten Halteelements 102 aus, welche einem von der Haltevorrichtung 101 in dem Haltezustand gehaltenen elektromagnetischen Strahler 104 zugewandt ist, an dem Tragelement 113 befestigt werden. Somit kann die Montage der ersten Halteelements 102 anwenderseitig und somit sehr komfortabel erfolgen. Da die Schraube des weiteren Befestigungsmittel 114 in dem Durchgangsloch 403 versenkt wird zum Befestigen des ersten Halteelements 102 an dem Tragelement 113, ist eine elektrische Isolierung des zu haltenden elektromagnetischen Strahlers 104 auch bei Verwendung einer Metallschraube gewährleistet.

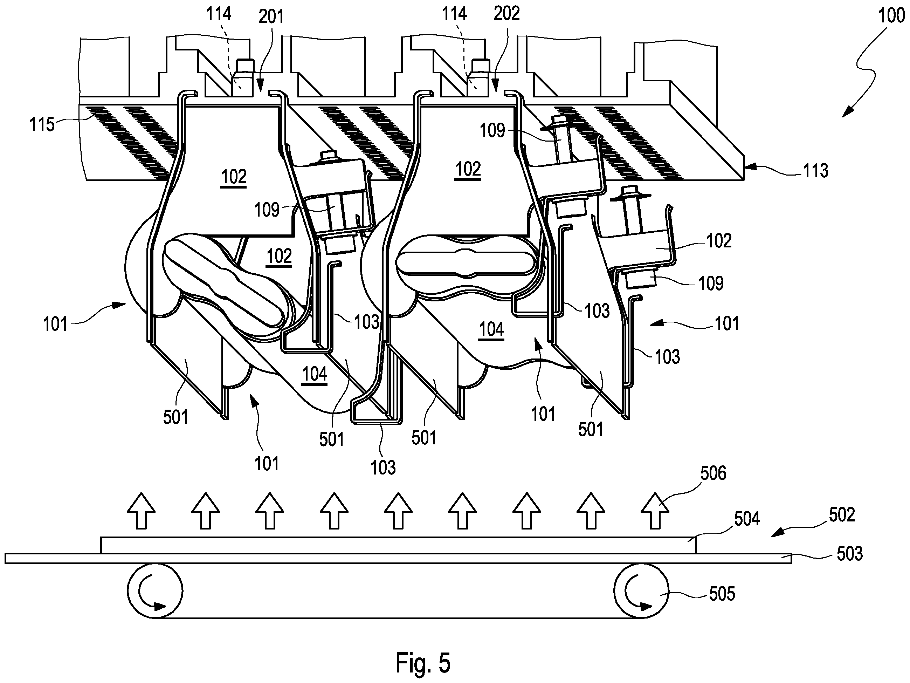

Figur 5 zeigt eine schematische Darstellung einer weiteren erfindungsgemäßen Anordnung 100 mit erfindungsgemäßen Haltevorrichtungen 101. Die gezeigte Anordnung 100 ist die der Figur 2, welche zusätzlich ein Bestrahlungsobjekt 502, welches dazu angeordnet und ausgebildet ist, mit der elektromagnetischen Strahlung der elektromagnetischen Strahler 104 der Anordnung 100 bestrahlt zu werden, beinhaltet. Ferner beinhaltet die Anordnung 100 eine Transporteinrichtung 505, die dazu angeordnet und ausgebildet ist, das Bestrahlungsobjekt 502, an eine Bestrahlungsposition unterhalb der elektromagnetischen Strahler 104 zu transportieren, so dass das Bestrahlungsobjekt 502 in der Bestrahlungsposition dazu angeordnet ist, mit der elektromagnetischen Strahlung der elektromagnetischen Strahler 104 bestrahlt zu werden. Die Transporteinrichtung 505 ist als Bandförderer ausgebildet. Das Bestrahlungsobjekt 502 beinhaltet ein flächenförmiges Substrat 503, welches eine Papierbahn als Bedruckstoff ist, und eine das flächenförmige Substrat 503 überlagernde Zusammensetzung 504. Letztere ist eine Druckfarbe, mit der die Papierbahn auf einer den elektromagnetischen Strahlern 104 in der Bestrahlungsposition zugewandten Seite bedruckt wurde. Die Druckfarbe beinhaltet Pigmente und ein Lösungsmittel. Die elektromagnetischen Strahler 104 sind IR-Strahler. Durch Bestrahlen der Druckfarbe mit der IR-Strahlung kann die Druckfarbe getrocknet werden, indem das Lösungsmittel mindestens teilweise verdampft wird. Der hierbei entstehende Lösungsmitteldampf 506 kann in der Anordnung der Figur 5 mit einer Absauganlage von der Anordnung 100 wegtransportiert werden. Hierzu weist die Anordnung oberhalb des Tragelements 113 Ventilatoren auf (nicht gezeigt), welche eine in der Figur 5 nach oben gerichtete Luftströmung erzeugen können. Die gezeigten Haltevorrichtungen 101 sowie die elektromagnetischen Strahler 104 sind hierzu von Gasstromleitelementen 501, hier Luftleitbleche, teilweise umgeben, so dass die Luftleitbleche jeweils mit den ersten Halteelementen 102 ineinandergreifen. Hierdurch kann die Luftströmung optimal geführt und somit der Lösungsmitteldampf 506 nach oben durch die Durchgangslöcher 115 in dem Tragelement 113 abgeführt werden. Gleichzeitig bleiben die ersten Befestigungsmittel 109 trotz der dichten Anordnung der elektromagnetischen Strahler 104 anwenderseitig leicht zugänglich, so dass die Haltevorrichtungen 101 mittels eines üblichen Schraubendrehers von dem Haltezustand in den Entnahmezustand überführt werden können und umgekehrt, um die elektromagnetischen Strahler 104 warten und austauschen zu können.

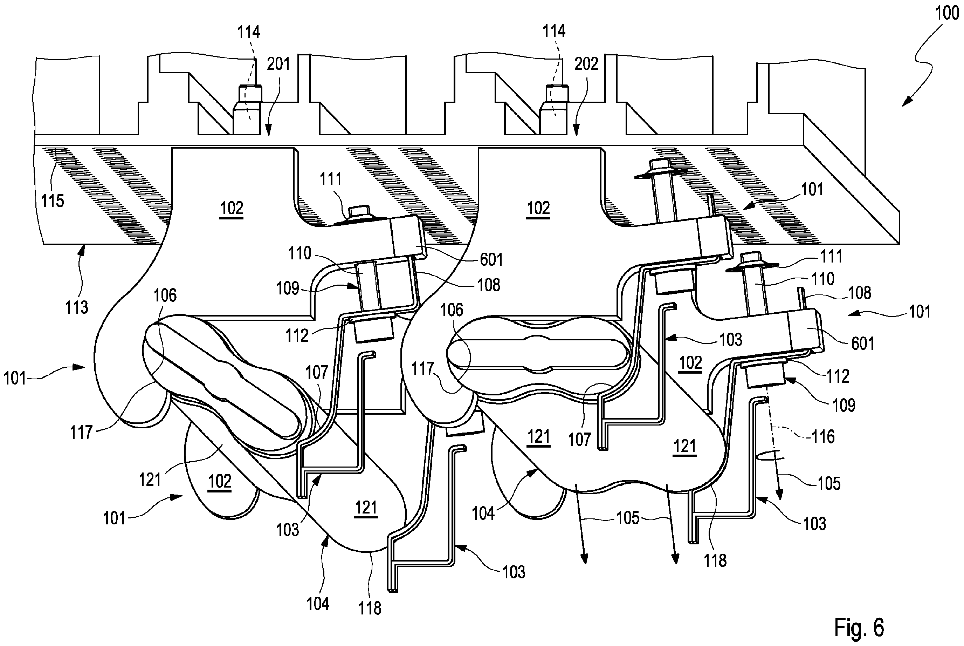

Figur 6 zeigt eine schematische Darstellung einer weiteren erfindungsgemäßen Anordnung 100 mit erfindungsgemäßen Haltevorrichtungen 101. Die gezeigte Anordnung 100 ist wie die Anordnung 100 der Figur 2 ausgebildet, wobei hier die Teile 108 der weiteren Halteelemente 103 jeweils in eine Öffnung 601 der ersten Halteelement 102 so eingreifen, dass die weiteren Halteelemente 103 beim Drehen der Schrauben 110 nicht um die Rotationsachse 116 rotieren können. Diese Ausführungsform gewährleistet die Rotationsunterdrückung noch zuverlässiger.

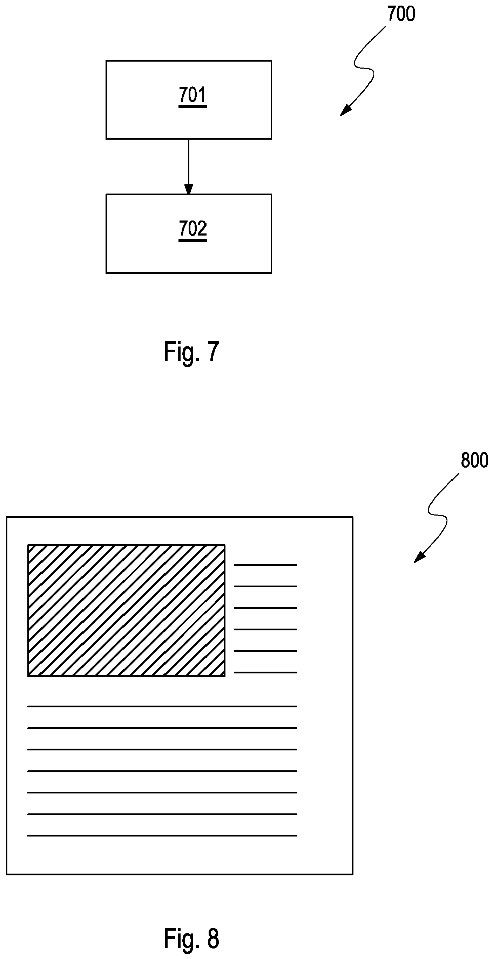

Figur 7 zeigt ein Ablaufdiagramm eines erfindungsgemäßen Verfahrens 700. In einem Verfahrensschritt I) 701 wird die Anordnung 100 der Figur 5 bereitgestellt. In einem nachfolgenden Verfahrensschritt II) 702 wird das Bestrahlungsobjekt 502 wie bereits zur Figur 5 beschrieben mit der elektromagnetischen Strahlung (IR-Strahlung) bestrahlt und somit die Druckfarbe getrocknet. Die Bestrahlungsdauer beträgt hier 200 ms. Das Verfahren 700 wird kontinuierlich durchgeführt, wobei die Bestrahlungsdauer durch die Transportgeschwindigkeit der Transporteinrichtung 505 eingestellt werden kann. Nach dem Verfahrensschritt II) 702 wird die bedruckte Papierbahn zu Seiten von Zeitungen zugeschnitten und die zugeschnittenen Seiten zu den Zeitungen zusammengestellt.

Figur 8 zeigt schematisch ein erfindungsgemäßes Druckerzeugnis 800. Gezeigt ist eine Zeitung, die mittels des zu Figur 7 beschriebenen Verfahrens 700 erhältlich ist.

Figur 9 zeigt eine schematische Darstellung einer nicht erfindungsgemäßen Haltevorrichtung 900 wie sie im Stand der Technik üblicherweise zum Halten eines IR-Strahlers eingesetzt wird. Hierzu wird der IR-Strahler in eine Klemmfeder 901 eingeführt und diese mittels Flachrundschraube 903 und Rändelmutter 902 festgestellt, so dass der IR-Strahler gehalten wird. Um die Klemmfeder 901 zu lösen oder fest zu ziehen muss stets die Rändelmutter 902, welche seitlich an der Haltevorrichtung 900 angeordnet ist, bedient werden. Sind nun mehrere IR-Strahler dicht nebeneinander angeordnet, ist die Rändelmutter 902 schlecht zugänglich. Die Zugänglichkeit wird noch schlechter, wenn die IR-Strahler mit Luftleitblechen für eine Luftkühlung oder eine Absaugung umgeben werden sollen. In diesem Fall wird die Rändelmutter entweder zwischen Klemmfeder 901 und Luftleitblech versteckt und somit unzugänglich oder es muss in dem Luftleitblech eine Aussparung vorgesehen werden, welche die Führung der Luftströmung und somit die Effektivität der Luftkühlung oder der Absaugung verschlechtert. Zudem kann die Rändelmutter 902 bei einer herabhängenden Montage des IR-Strahlers herunterfallen, wenn sie zu weit herausgedreht wird. Wird die Klemmfeder gelöst, muss zudem darauf geachtet werden, dass der IR-Strahler nicht aus dieser herausfällt. Die Befestigung der Klemmfeder 901 an einer Trägerdecke erfolgt mittels Sechskantschraube 904, Unterlegscheibe 906, Federring 907 und Sechskantmutter 908. Hierbei werden zudem 2 Keramikscheiben 905 eingesetzt, um eine elektrische Isolierung des IR-Strahlers gegenüber der Trägerdecke herstellen zu können. Die Verwendung dieser zahlreichen Einzelteile gestaltet die Montage der Haltevorrichtung 900 unkomfortable und zudem fehleranfällig. So können gerade bei der Überkopfmontage Einzelteile herabfallen und dann schwer wieder auffindbar sein. Zudem können die Keramikscheiben 905 beschädigt werden. Ferner weist die Klemmfeder 901 recht scharfe Kanten auf, welche das Quarzglas des IR-Strahlers beim Einsetzen des IR-Strahlers in die Klemmfeder oder beim Entfernen daraus beschädigen können.

### LISTE DER BEZUGSZEICHEN

- **100**: erfindungsgemäße Anordnung
- **101**: erfindungsgemäße Haltevorrichtung
- **102**: erstes Halteelement
- **103**: weiteres Halteelement
- **104**: elektromagnetischer Strahler
- **105**: erste Richtung
- **106**: erste Oberflächenform
- **107**: weitere Oberflächenform
- **108**: Teil des weiteren Halteelements
- **109**: erstes Befestigungsmittel
- **110**: Schraube
- **111**: Gewindesicherungsscheibe
- **112**: Unterlegscheibe
- **113**: Tragelement
- **114**: weiteres Befestigungsmittel
- **115**: Durchgangsloch
- **116**: Rotationsachse
- **117**: erste longitudinale Stelle
- **118**: weitere longitudinale Stelle
- **119**: Länge des elektromagnetischen Strahlers
- **120**: Breite des elektromagnetischen Strahlers
- **121**: Kammer des elektromagnetischen Strahlers
- **201**: erfindungsgemäße Haltevorrichtung im Entnahmezustand
- **202**: erfindungsgemäße Haltevorrichtung im Haltezustand
- **401**: Oberfläche des ersten Halteelements, welche zum Zweck des Befestigens an dem Tragelement dazu ausgebildet ist, mit dem Tragelement kontaktiert zu werden
- **402**: Oberfläche des ersten Halteelements, welche einem von der Haltevorrichtung in dem Haltezustand gehaltenen elektromagnetischen Strahler zugewandt ist
- **403**: Durchgangsloch
- **501**: Gasstromleitelement
- **502**: Bestrahlungsobjekt
- **503**: flächenförmiges Substrat
- **504**: Zusammensetzung
- **505**: Transporteinrichtung
- **506**: Lösungsmitteldampf
- **601**: Öffnung
- **700**: erfindungsgemäßes Verfahren
- **701**: Verfahrensschritt I)
- **702**: Verfahrensschritt II)
- **800**: erfindungsgemäßes Druckerzeugnis
- **900**: nicht erfindungsgemäße Haltevorrichtung
- **901**: Klemmfeder
- **902**: Rändelmutter
- **903**: Flachrundschraube
- **904**: Sechskantschraube
- **905**: Keramikscheibe
- **906**: Unterlegscheibe
- **907**: Federring
- **908**: Sechskantmutter

## Patentansprüche

1. Eine Haltevorrichtung (101), beinhaltend
a) ein erstes Halteelement (102), und
b) ein weiteres Halteelement (103);
wobei die Haltevorrichtung (101) dazu ausgebildet ist,
a. reversibel aus einem Haltezustand (202) in einen Entnahmezustand (201) überführt zu werden, und
b. in dem Haltezustand (202) einen elektromagnetischen Strahler (104) mittels eines Formschlusses des elektromagnetischen Strahlers (104) mit dem ersten Halteelement (102) und dem weiteren Halteelement (103) so zu halten, dass der elektromagnetische Strahler (104) dazu angeordnet ist, elektromagnetische Strahlung in eine erste Richtung (105) abzustrahlen,
wobei die Haltevorrichtung (101) ferner so ausgebildet ist, dass
A) der Formschluss in dem Entnahmezustand (201) gelöst ist, und
B) ein Überführen der Haltevorrichtung (101) aus dem Haltezustand (202) in den Entnahmezustand (201) ein Bewegen des weiteren Halteelements (103) relativ zu dem ersten Halteelement (102) in der ersten Richtung (105) beinhaltet.

2. Die Haltevorrichtung (101) nach Anspruch 1, wobei der elektromagnetische Strahler (104) eine erste Seite und eine der ersten Seite gegenüberliegende weitere Seite hat,
wobei das erste Halteelement (102) eine erste Oberflächenform (106) beinhaltet, die dazu ausgebildet ist, in dem Haltezustand (202) den elektromagnetischen Strahler (104) auf seiner ersten Seite aufzunehmen,
wobei das weitere Halteelement (103) eine weitere Oberflächenform (107) beinhaltet, die dazu ausgebildet ist, in dem Haltezustand (202) den elektromagnetischen Strahler (104) auf seiner weiteren Seite aufzunehmen,
wobei die erste Oberflächenform (106) und die weitere Oberflächenform (107) zusammen den Formschluss mit dem elektromagnetischen Strahler (104) bilden.

3. Die Haltevorrichtung (101) nach Anspruch 1 oder 2, wobei die Haltevorrichtung (101) zusätzlich ein erstes Befestigungsmittel (109) beinhaltet,
wobei das erste Halteelement (102) und das weitere Halteelement (103) zumindest in dem Haltezustand (202) mittels des ersten Befestigungsmittels (109) miteinander verbunden sind.

4. Die Haltevorrichtung (101) nach Anspruch 4, wobei das erste Befestigungsmittel (109) mindestens teilweise zwischen Bereichen des weiteren Halteelements (103) angeordnet ist, so dass das erste Befestigungsmittel (109) bei einem Translatieren des ersten Befestigungsmittels (109) in die erste Richtung um (105) eine minimale Wegstrecke das erste Befestigungsmittel (109) das weitere Halteelement (103) mitnimmt und so in die erste Richtung (105) bewegt.

5. Die Haltevorrichtung (101) nach einem der vorhergehenden Ansprüche, wobei die Haltevorrichtung (101) so ausgebildet ist, dass das weitere Halteelement (103) bei dem Überführen der Haltevorrichtung (101) aus dem Haltezustand (202) in den Entnahmezustand (201) so durch das erste Halteelement (102) geführt ist, dass bei diesem Überführen eine Rotationsbewegung des weiteren Halteelements (103) um eine Rotationsachse (116), die sich entlang der ersten Richtung (105) erstreckt, um mehr als 20° unterdrückt wird.

6. Die Haltevorrichtung (101) nach einem der vorhergehenden Ansprüche, wobei das erste Halteelement (102) elektrisch isolierend ist.

7. Eine Anordnung (100), beinhaltend als Elemente
a] eine erste Haltevorrichtung (101), die gemäß der Haltevorrichtung (101) nach einem der vorhergehenden Ansprüche ausgebildet ist, und
b] den elektromagnetischen Strahler (104).

8. Die Anordnung (100) nach Anspruch 7, wobei die Anordnung (100) ferner ein Bestrahlungsobjekt (502), welches dazu angeordnet und ausgebildet ist, mit der elektromagnetischen Strahlung des elektromagnetischen Strahlers (104) bestrahlt zu werden, beinhaltet.

9. Die Anordnung (100) nach Anspruch 7 oder 8, wobei die Anordnung (100) ferner eine Strömungstransporteinrichtung beinhaltet, die dazu angeordnet und ausgebildet ist, ein Gas mittels einer Gasströmung von der Anordnung (100) weg zu transportieren.

10. Die Anordnung (100) nach einem der Ansprüche 7 bis 9, ferner beinhaltend eine weitere Haltevorrichtung (101), die gemäß der Haltevorrichtung (101) nach einem der Ansprüche 1 bis 6 ausgebildet ist,
wobei der elektromagnetische Strahler (104)
A] durch die erste Haltevorrichtung (101) an einer ersten longitudinalen Stelle (117) des elektromagnetischen Strahlers (104), und
B] durch die weitere Haltevorrichtung (101) an einer weiteren longitudinalen Stelle (118) des elektromagnetischen Strahlers (104)
gehalten ist.

11. Ein Verfahren (700), beinhaltend als Verfahrensschritte
I) ein Bereitstellen
i) der Haltevorrichtung (101) nach einem der Ansprüche 1 bis 6, sowie des elektromagnetischen Strahlers (104), oder
ii) der Anordnung (100) nach einem der Ansprüche 7 bis 10; und
II) ein Bestrahlen eines Bestrahlungsobjekts (502) mit der elektromagnetischen Strahlung;
wobei der elektromagnetische Strahler (104) in dem Verfahrensschritt II) (702) mindestens teilweise von der Haltevorrichtung (101) in dem Haltezustand (202) gehalten wird.

12. Das Verfahren (700) nach Anspruch 11, wobei der Verfahrensschritt II) (702) ein Verringern eines Anteils einer Flüssigkeit in dem Bestrahlungsobjekt (502) beinhaltet.

13. Ein Druckerzeugnis (800), erhältlich durch das Verfahren (700) nach Anspruch 11 oder 12.

14. Eine Verwendung der Haltevorrichtung (101) nach einem der Ansprüche 1 bis 6 zu einem Halten des elektromagnetischen Strahlers (104).

15. Eine Verwendung der Anordnung (100) nach einem der Ansprüche 7 bis 10 in der Herstellung eines Druckerzeugnisses (800).
